# EUROPEAN PATENT SPECIFICATION

(11) **EP 3 856 623 B1**
(45) Date of publication and mention of the grant of the patent: **02.11.2022**
(21) Application number: 19783712.3
(22) Date of filing: 26.09.2019
(51) Int. Cl.: B62K 5/05, B62K 5/08, B62K 5/10, B62K 25/16, B62K 5/027, B62K 21/20

(54) **FORECARRIAGE FOR MOTOR VEHICLES WITH TWO FRONT STEERED WHEELS, WITH A CENTRAL SHOCK ABSORBER ASSEMBLY, AND MOTOR VEHICLE COMPRISING SAID FORECARRIAGE**
VORDERWAGEN FÜR KRAFTFAHRZEUGE MIT ZWEI VORDEREN GELENKTEN RÄDERN MIT EINER ZENTRALEN STOSSDÄMPFERANORDNUNG UND KRAFTFAHRZEUG MIT DIESEM VORDERWAGEN
AVANT-TRAIN POUR VÉHICULES À MOTEUR À DEUX ROUES DIRECTRICES AVANT, AVEC ENSEMBLE CENTRAL ABSORBEUR DE CHOCS, ET VÉHICULE À MOTEUR COMPRENANT LEDIT AVANT-TRAIN

(30) Priority: 28.09.2018 IT 201800009015
(43) Date of publication of application: 04.08.2021
(73) Proprietor: Piaggio & C. S.P.A., 56025 Pontedera Pisa (IT)
(72) Inventor: RAFFAELLI, Andrea, 56025 Pontedera (PI) (IT)
(74) Representative: Mannucci, Michele
(86) International application number: PCT/IB2019/058180
(87) International publication number: WO 2020/065577

(56) References cited:
- EP-A1- 3 300 999
- EP-A2- 3 222 508
- WO-A1-2011/029795
- WO-A1-2017/021905
- CH-A- 304 928
- JP-A- H0 245 287

## Description

### TECHNICAL FIELD

The present invention relates to the field of tilting motor vehicles, i.e., vehicles provided with a tilting movement around a median plane which extends in longitudinally along the vehicle. Tilting motor vehicles are typically three-wheeled motorcycles, with two front steered wheels and one rear driving wheel. The tilting movement allows the motor vehicle to lean during driving, for example when traveling a curve.

### BACKGROUND ART

In the field of motor vehicles there is an increasing offer of vehicles that combine the peculiarities of motorcycles, in terms of maneuverability, with the stability of four-wheeled vehicles.

These models are represented, for example, by three-wheeled motor vehicles provided with two front steered wheels and with one rear driving wheel, and by four-wheeled motor vehicles, typically called quad-bikes.

More in detail, the three-wheeled motor vehicles mentioned above are provided with two front steered wheels, i.e., adapted to steer the vehicle controlled by the driver by means of the handlebar, and tilting, i.e., laterally tiltable with a leaning movement, in other terms a pivoting movement around an axis substantially oriented in the direction of travel. Three-wheeled vehicles also comprise a rear driving wheel, drivingly coupled to the engine and having the purpose of providing the torque and hence of allowing drive, while the front coupled wheels have the purpose of providing the directionality of the vehicle.

The coupled front wheels can tilt as well as steer. Due to this solution, with respect to a motor vehicle with only two wheels, motor vehicles with two wheels coupled to the forecarriage have greater stability guaranteed by the two front wheels that rest on the ground, similarly to the stability provided by an automobile.

The front wheels are kinematically connected to one another through kinematic mechanisms that ensure that these wheels tilt and steer substantially synchronously, for example through the interposition of four-bar linkages which connect the front wheels to a forecarriage frame. Moreover, these motor vehicles are provided with two independent shock absorber assemblies, one for each front steered wheel. Each shock absorber assembly is provided with an elastic element (spring) and a viscous element (dissipator or brake).

Three-wheeled tilting motor vehicles therefore aim to guarantee the user easy handling of a two-wheeled motorcycle and, at the same time, the stability and safety of a four-wheeled motor vehicle.

A three-wheeled tilting motor vehicle of this type is disclosed, for example, in WO-2017/115294, WO-2017/115295, WO-2017/115296, 2017/115297.

Tilting motor vehicles with two front steered wheels usually have a double suspension, i.e., a suspension system with a first left shock absorber assembly and a second right shock absorber assembly, associated with the left front wheel and with the right front wheel, respectively.

EP3222508 A2 is considered as the closest prior art for the subject-matter of claim 1 and discloses a motor vehicle having a back drive wheel and two front steered wheels connected to a forecarriage. The forecarriage comprises: a forecarriage frame; a tilting four-bar linkage connected to the forecarriage frame that supports, by means of a first supporting member and a second supporting member, a first front wheel and a second front wheel respectively; a steering column tube, connected to the forecarriage frame; a steering column rotatingly housed in the steering column tube and connected to a first connecting bar which connects the first supporting member and the second supporting member to one another. This vehicle of the current art also includes a suspension which connects the so-called sprung mass to the so-called unsprung mass of the vehicle.

In EP3222508 the suspension. which connects the sprung mass to the unsprung mass of the vehicle, is formed frontally by first suspension means for the left front wheel and second suspension means for the right front wheel. The first suspension means and the second suspension means include respective first and second shock absorber assemblies. Each shock absorber assembly includes a damper and a spring and dampens the up-and-down movement of the front steered wheels, forming part of the unsprung mass.

In addition to the two, right and left shock absorber assemblies, the vehicle disclosed in EP3222508 comprises a silent-block interposed between a steering bar and a steering column. The silent-block comprises two rigid coaxial bodies concentric to one another and coaxial to the axis of rotation of the steering column. The inner cylindrical body is connected to the steering column, while the outer cylindrical body is connected to the steering bar. Between the two cylindrical bodies a rubber ring is interposed. The silent-block has the purpose of preventing vibrations, caused by a difference between the friction forces between the two front steered wheels and the ground, from being transmitted to the steering column. The silent-block does not have the function of damping the up-and-down movements of the front steered wheels, i.e. it does not form part of the vehicle suspension.

The presence of two front shock absorber assemblies influences the total cost of the vehicle and is not without other drawbacks. In fact, due to manufacturing tolerances, both the elastic elements (springs) and the viscous elements (brakes) of the shock absorber assemblies have features that can vary even significantly from one shock absorber assembly to another of the same model. These differences between nominally equal shock absorber assemblies cause undesirable difference in the behavior of the two shock absorber assemblies during driving. This results in less than harmonious driving by the driver.

Therefore, the need exists to provide shock absorber assemblies for forecarriages of motor vehicles, in particular tilting motor vehicles, with two front steered wheels, which limit or eliminate one or more of the problems of forecarriages of the current state of the art and of the related motor vehicles.

### SUMMARY OF THE INVENTION

To overcome or alleviate one or more of the drawbacks of forecarriages of vehicles of the current state of the art, there is proposed a forecarriage comprising a forecarriage frame, to which a kinematic steering mechanism is connected, which is configured to control steering of the front wheels. The kinematic steering mechanism comprises a tilting four-bar linkage, hereinafter referred to simply as four-bar linkage for the sake of conciseness, to which, by means of a first supporting member and a second supporting member, a first front wheel and a second front wheel are connected respectively. Moreover, the forecarriage comprises a steering column tube, with a steering column rotatingly housed in the steering column tube and connected to the kinematic steering mechanism. Moreover, the kinematic steering mechanism comprises a first connecting bar of the first supporting member and of the second supporting member of the two wheels. The first connecting bar participates in the up-and-down movement (also referred to as "sussultatory movement") of the first wheel and of the second wheel, i.e., the movement of the wheel associated with compression and extension of the shock absorber assembly. These latter comprise a single shock absorber assembly interconnected between the steering column and the first connecting bar. The shock absorber assembly is adapted to dampen up-and-down movements of the first front wheel and of the second front wheel. The up-and-down movement is in substance the movement of the wheel due to a reaction force received from the ground over which the vehicle travels.

In substance, the suspension system comprises a single shock absorber assembly that dampens the up-and-down movements of both front steered wheels. This allows saving in costs and improved behavior of the vehicle, as it is not affected by any differences in the behavior of the suspension system for the two front wheels.

In practical embodiments, the first supporting member and the second supporting member are hinged, i.e., rotatably connected to the four-bar linkage.

The shock absorber assembly interconnected between the steering column and the first connecting bar can advantageously be the only shock absorber assembly for damping the up-and-down movement of the first steering front wheel and of the second steering front wheel.

In practical embodiments, each supporting member is connected to the tilting four-bar linkage through at least one hinge, or through a system of hinges, for instance forming a four-bar linkage, such as to perform rotational or rotational-translational movements with respect to a respective component of the tilting four-bar linkage.

In embodiments described herein, the four-bar linkage comprises: a first cross member, or upper cross member, which extends in transverse direction with respect to a center-line plane of the forecarriage, i.e., in a direction from right to left; a second cross member, or lower cross member, which extends in transverse direction with respect to a center-line plane of the forecarriage, i.e., in a direction from right to left; a first upright, which joins first ends of the upper cross member and of the lower cross member to one another and which is located on one side, for example the left side with respect to the center-line plane of the forecarriage; a second upright, which joins second ends of the upper cross member and of the lower cross member to one another. The two cross members are suitably hinged, in respective mid-position points, to the forecarriage frame to pivot with respect thereto, when the vehicle to which the forecarriage belongs performs a tilting movement. The pivot axes of the upper and lower cross members with respect to the frame can be substantially parallel to the axes of the hinges with which the four components of the four-bar linkage (the two cross members and the two uprights) are joined to one another.

In practical embodiments, the forecarriage can be configured so that the four-bar linkage is arranged substantially at the height of the wheels, i.e., so that the cross members and the uprights of which it is formed are between the two front steered wheels.

In embodiments disclosed herein, the supporting members of the wheels are each connected to one of the two uprights of the four-bar linkage so as to be rotatable around a respective steering axis and to be able to perform a rotation or roto-translation movement with respect to the uprights, which corresponds to an up-and-down movement of the respective wheel. For instance, each supporting member may comprise a rigid main body and two rocker arms connecting the main body to the uprights of the tilting four-bar linkage. In such case each front steered wheel is supported by a respective four-bar linkage formed by the main body of the supporting member, the rocker arms and the respective upright of the tilting four-bar linkage.

In advantageous embodiments the shock absorber assembly can be connected to the steering column by means of a mechanism with two degrees of freedom. In particular, the degrees of freedom can allow rotations around two axes of rotation, preferably orthogonal to one another. Moreover, the shock absorber assembly, which comprises a damping element (dissipator) and an elastic element, allows a third mutual translation movement between steering column and connecting bar.

In practical embodiments, the two degrees of freedom can be achieved by connecting the shock absorber assembly to the steering column so as to be rotatable around a first, substantially horizontal axis, while looking at the vehicle from the front in an erect position, i.e. not inclined as a result of tilting, and a second axis substantially parallel to the steering column. In the present context, "horizontal" means the position with forecarriage in neutral position, i.e., with zero tilting angle. In practice, the second axis of rotation is orthogonal to the axis of the steering column and extends in a direction from right to left of the vehicle.

Advantageously, the shock absorber assembly can be connected to the first connecting bar by means of a mechanism with two degrees of freedom, in particular around two axes of rotation, preferably orthogonal to one another. In practice, the first connecting bar and the shock absorber assembly can be connected to one another so as to be rotatable with respect to one another around at least one of: an axis oriented according to a longitudinal direction of the first connecting bar, and an axis orthogonal to the longitudinal direction of the first connecting bar and to the longitudinal axis of the shock absorber assembly.

As will be clear from the following description, the first connecting bar can be made of two or more parts, which can be connected to one another by means of connections that allow a mutual rotation of two adjacent parts around an axis parallel to the longitudinal direction of the first connecting bar. In this case, the axis oriented according to the longitudinal direction of the first connecting bar is defined by a system that joins the two or more parts of which the first connecting bar is composed to one another. For example, the first connecting bar can comprise a central or intermediate part, which is hinged to the steering column so as to be rotatable around an axis orthogonal to the direction of the first connecting bar and to the axis of the shock absorber assembly. This axis in substance lies in the center-line plane of the vehicle when this is in erect position with the wheels straight. Two end parts can be joined to the central part of the first connecting bar, each connected to the central part with a bearing that allows mutual rotation between central part and end part around the axis oriented according to the longitudinal direction of the first connecting bar.

In improved embodiments, the first connecting bar comprises at least two connecting bar portions connected to one another so as to allow a variation in the length of the first connecting bar in the presence of an unequal up-and-down movement of the first front steered wheel and of the second front steered wheel. Advantageously, a second connecting bar can be provided, configured to transmit the steering movement from one to the other of the two front steered wheels. The second connecting bar has a fixed length and can be suitably connected to the four-bar linkage in points which are neutral with respect to the up-and-down movements of the first front steered wheel and of the second front steered wheel. This means that the distance between the two neutral points remains constant even in case of different up-and-down movements of the two steered wheels. In this way, the first connecting bar transmits to one of the two front steered wheels the steering movement imparted by the driver by means of the handlebar, the steering column and the central shock absorber assembly, interposed between steering column and first connecting bar. The second connecting bar transmits the steering movement to the other of the two front steered wheels. The first connecting bar, which (being connected to the shock absorber assembly) follows the up-and-down motion of the wheels, can vary in length, so that if the two wheels move in a different manner the first connecting bar can undergo a variation in length. The second connecting bar does not require to vary in length, as it does not follow the up-and-down movement of the wheels.

In advantageous embodiments, a device for blocking the tilting movement of the four-bar linkage can be provided. In practice, the device for blocking the tilting movement can comprise a member for blocking the first connecting bar and the shock absorber assembly, which selectively prevents a relative rotation movement between the shock absorber assembly and the first connecting bar. In this way, a blocking of the tilting movement that does not prevent steering movements is achieved.

According to the invention, a motor vehicle also is provided, comprising a rear section with at least one driving wheel and a forecarriage as defined above.

Further advantageous features and embodiments of the forecarriage and of the vehicle comprising it are described hereunder and defined in the appended claims, which form an integral part of the present description.

### BRIEF DESCRIPTION OF THE DRAWINGS

The invention will be better understood by following the description and the accompanying drawings, which illustrate exemplary exemplifying and non-limiting embodiments of the invention. More particularly, in the drawings:
Fig.1 shows a simplified kinematic diagram of a forecarriage according to the present disclosure, in a first embodiment,
Fig.2 shows the diagram of Fig.1 in a condition of unequal up-and-down movement for the two front steered wheels, illustrating a dynamic feature of the kinematic diagram;
Fig.3 shows a simplified kinematic diagram of a forecarriage according to the present disclosure, in a second embodiment;
Fig.4 shows a simplified kinematic diagram of a forecarriage according to the present disclosure, in a third embodiment;
Fig.5 shows a simplified kinematic diagram of a forecarriage according to the present disclosure in a fourth embodiment;
Fig.6 shows a side view of a three-wheeled scooter according to an embodiment;
Fig.7 shows a plan view according to VII-VII of Fig.6;
Fig.8 shows a front view according to VIII-VIII of Fig. 7;
Fig.9 shows a bottom isometric view of the scooter of Figs. 6 to 8;
Figs. 10 and 11 show enlarged isometric views, with parts removed, of the forecarriage and of the kinematic steering mechanism of the scooter of Figs. 6 to 9, according to two distinct points of view, and more precisely from the rear side and from the front side;
Fig.12 shows a front view of the steering column and of the kinematic steering mechanism connected thereto isolated from the forecarriage frame and without wheels;
Fig. 13 shows a section according to XIII-XIII of Fig. 12;
Fig. 14 shows a view according to XIV-XIV of Fig. 12;
Fig.15 shows a section according to XV-XV of Fig.13;
Figs. 16 and 17 show isometric views of the steering column and of the kinematic steering mechanism of Figs. 12-15;
Figs. 18 and 19 show one of the wheels of the scooter of Figs. 6 to 17 and the respective supporting member in two different isometric views;
Fig.20 shows a side view of a three-wheeled scooter according to a further embodiment;
Fig. 21 shows a plan view according to XXI-XXI of Fig. 20;
Fig.22 shows a front view according to XXII-XXII of Fig. 20;
Fig.23 shows a bottom isometric view of the scooter of Figs. 20 to 22;
Figs. 24 and 25 show enlarged isometric views, with parts removed, of the forecarriage and of the kinematic steering mechanism of the scooter of Figs. 20 to 23, according to two distinct angles, and more precisely from the rear side and from the front side;
Fig.26 shows a front view of the steering column and of the kinematic steering mechanism connected thereto isolated from the forecarriage frame and without wheels;
Fig.27 shows a section according to XXVII-XXVII of Fig.26;
Fig. 28 shows a view according to XXVIII-XXVIII of Fig. 26;
Fig.29 shows a section according to XXIX-XXIX of Fig.27;
Fig.30 shows a section according to XXX-XXX of Fig.27;
Figs. 31 and 32 show isometric views of the steering column and of the kinematic steering mechanism of Figs. 26 to 30;
Fig.33 shows a side view of an upright of the four-bar linkage of the kinematic steering mechanism of Figs. 6 and following, on which the respective sleeve for connection of the supporting member of the respective wheel is mounted;
Fig.34 shows a rear view according to XXXIV-XXXIV of Fig. 33;
Fig. 35 shows a section according to XXXV-XXXV of Fig.34; and
Fig.36 shows an exploded isometric view of the upright of Figs. 33 to 35.

### DETAILED DESCRIPTION OF EMBODIMENTS

In brief, in a motor vehicle with two front steered wheels, for example a scooter, there is provided a forecarriage with a frame, to which a four-bar linkage is connected, having two cross members (or connecting rods) and two rocker arms. The cross members are horizontal when the vehicle is in neutral condition, i.e., not tilted (zero tilting angle) and moves according to a rectilinear trajectory (zero steering angle). The cross members are connected to one another by two uprights that, together with the cross members, form the four-bar linkage. Two supporting members, one for each front wheel (right and left) are associated with the uprights. The supporting members rotate around steering axes and are rotatable or roto-translatable with respect to springing axes, to allow a dive movement. To steer the vehicle a handlebar is provided, which is connected to the four-bar linkage by means of a steering column, rotatingly housed in a steering column tube. The steering column tube is fixed to the forecarriage frame. Moreover, the kinematic steering mechanism comprises a connecting bar which connects the two supporting members of the two wheels to one another. With the vehicle in neutral position the connecting bar is substantially horizontal. The steering movement controlled by the handlebar is transmitted by the steering column to the connecting bar. The wheels must be able to perform an up-and-down movement, i.e., a pivoting or roto-translation movement in a plane substantially orthogonal to the axis of the wheels, which is allowed by the supporting members that are rotatable or roto-translatable with respect to the springing axes. This movement is dampened by a shock absorber assembly, which comprises an elastic component and a viscous component (break or dissipator). The shock absorber assembly is single for the two wheels and is positioned between the steering column and the first connecting bar.

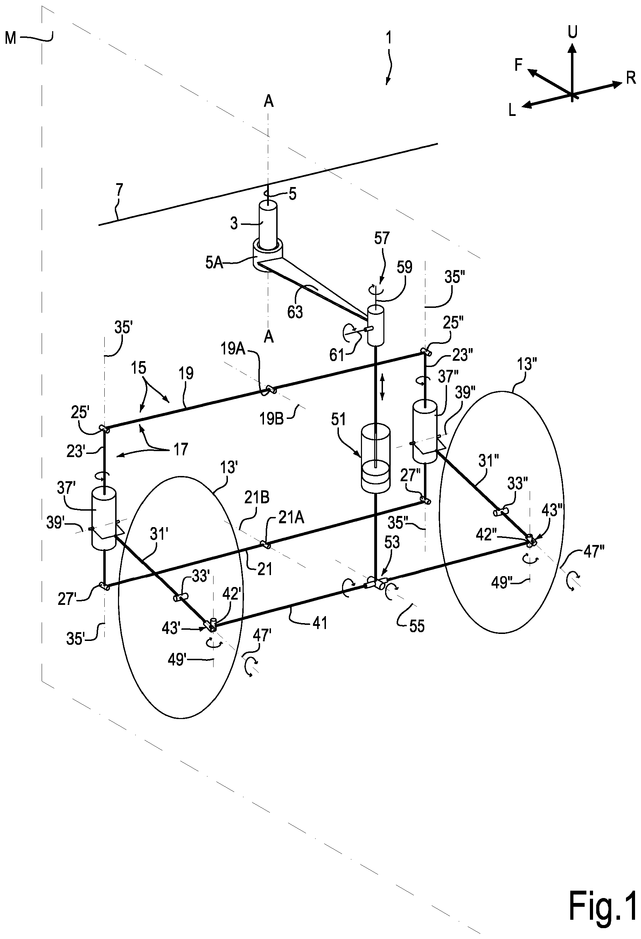

### Kinematic diagrams of the kinematic steering mechanisms (Figs. 1 to 5)

For a better understanding of the innovative features of the various embodiments of forecarriages according to the present invention and of the motor vehicle that uses them, before illustrating concrete embodiments of the forecarriage and of the related motor vehicle that uses it, conceptual kinematic diagrams illustrating the fundamental components of the forecarriage, and their manner of operating, will be described. The simplified kinematic diagrams which will be referred to initially are shown in Figs. 1 to 5. The subsequent figures illustrate concrete embodiments of these kinematic diagrams.

For greater clarity of the drawings, where appropriate arrows have been added to the accompanying figures to indicate the orientation in space, referring to a position of normal use of the vehicle. In this sense, the arrow U indicates an upward vertical direction, the arrow D indicates a downward vertical direction; the arrows L and R indicate a horizontal direction, respectively "left" and "right" of the vehicle, with respect to the direction of forward travel. The arrow F indicates the horizontal direction, according to the direction of travel.

Fig.1 shows a kinematic diagram of a forecarriage for a motor vehicle, in particular a tilting motor vehicle, for example a motorcycle with two front steered wheels and a rear section, comprising for example one or two fixed axle, i.e., non-steering, driving wheels. The rear section is not shown in Fig.1.

The forecarriage is indicated as a whole with 1. It has a forecarriage frame, not shown in Fig.1, with which a steering column tube 3 is integral. A steering column 5 integral with a handlebar 7 is rotatingly housed in the steering column tube 3. The steering column 5 is rotatable around an axis A-A when controlled by the driver by means of the handlebar 7.

A first front steered wheel 13' and a second front steered wheel 13" are associated with the forecarriage 1. Hereinafter, components, assemblies or elements symmetrical with respect to a center-line plane M of the forecarriage 1 are indicated with the same reference number followed by one apostrophe (') for elements on one side of the center-line plane M, for example the left side of the driver, and with two apostrophes (") for elements on the other side of the center-line plane M, for example the right side of the driver.

In the embodiment of Fig.1 the forecarriage 1 has a kinematic steering mechanism, indicated as a whole with 15, which allows the front steered wheels 13' and 13" to follow synchronous steering and tilting movements, the latter being the movement that allows the motor vehicle on which the forecarriage 1 is mounted to lean, for example when traveling a curve.

In particular, the kinematic mechanism 15 comprises a four-bar linkage 17, more precisely an articulated parallelogram, which has a first upper cross member 19 and a second lower cross member 21, substantially parallel to one another. The two cross members 19, 21 are hinged to the frame (not shown) of the forecarriage 1 in 19A and 21A by means of respective hinges. In this way, the two cross members 19 and 21 are rotatable around respective parallel axes of rotation lying on the center-line plane M of the forecarriage frame. The axes are indicated with 19B and 21B, respectively. Moreover, the four-bar linkage 17 comprises two uprights 23' and 23" on the two sides of the forecarriage 1. The reference numbers 25', 27' and 25", 27" indicate hinges on the two sides of the forecarriage 1, with which the uprights 23' and 23" are hinged to the cross members 19, 21. The hinges 25', 25" and 27', 27" define mutual rotation axes of the cross members 19, 21 and of the uprights 23', 23", which are parallel to the axes 19B and 21B of rotation of the cross members 19, 21 with respect to the forecarriage frame.

The kinematic steering mechanism 15 comprises, besides the four-bar linkage 17, a pair of so-called supporting members indicated with 31' and 31", which rotatingly support the wheels 13' and 13", respectively.

In the schematic of Fig.1, the supporting members 31', 31" are schematically represented by rectilinear beams purely for illustrative purposes. Each supporting member 31', 31" supports the journals 33', 33" of the respective wheel 13', 13" and other mechanical components, for example the brakes, not shown in the simplified kinematic diagram of Fig.1.

Each supporting member 31', 31" is connected to the respective upright 23', 23" of the four-bar linkage 17. The connection between upright 23', 23" and supporting member 31', 31" is such that the supporting member is rotatable around a steering axis 35', 35" of the respective wheel 13', 13". In the diagram of Fig.1, each steering axis 35', 35" coincides with a longitudinal axis of the respective upright 23', 23", i.e., with an axis extending parallel to the prevalent longitudinal direction of the upright 23', 23". Mutual rotation between upright 23', 23" and supporting member 31', 31" can be obtained, for example, by means of a sleeve 37', 37" mounted around the upright 23', 23" and to which the respective supporting member 31', 31" is in turn connected, with the possibility of a relative movement between supporting member and sleeve, described hereunder.

Each supporting member 31', 31" is connected to the upright (and more precisely to the sleeve 37' 37") so as to be able to perform a rotation or roto-translation motion with respect to the upright in a plane that, when the vehicle is in neutral position (i.e., vertical without inclination due to tilting), it is in vertical position. In the simplified kinematic diagram of Fig.1 the movement of each supporting member 31', 31" is represented as rotation or pivoting movement around an axis 39', 39", orthogonal to the steering axis 35' 35", which can be referred to as a springing axis. In practice, in the diagram of Fig.1 each supporting member 31', 31" is therefore connected to the respective sleeve 37', 37" by means of a hinge with a horizontal axis, when the motor vehicle and the forecarriage 1 thereof are in neutral position, with zero tilting angle. The simultaneous movement of the two supporting members around the axes 39' and 39" results in a pitch movement of the vehicle on which the forecarriage 1 is installed.

Rotation around the axes 35', 35" allows the wheels 13', 13" to steer, while rotation around the axes 39', 39" allows the wheels 13', 13" to perform an up-and-down movement, which can be independent for the two wheels, and which is dampened by the shock absorber assembly, described hereunder.

The kinematic steering mechanism 15 comprises, besides the supporting members 31', 31" and the four-bar linkage 17, a first connecting bar 41, with two ends 42' and 42" connected to the first supporting member 31' and to the second supporting member 31", respectively. In the embodiment of Fig.1, the first connecting bar 41 acts as a steering bar and transmits, in the manner described hereunder, to the wheels 13', 13" the steering movement around the steering axes 35' and 35", controlled by the driver by means of the handlebar 7. Each end 42', 42" of the first connecting bar 41 is connected to the respective supporting member 31' 31" by means of a mechanism with two degrees of freedom indicated with 43' and 43". In practice, each mechanism 43', 43" can comprise a pair of hinges that allow a mutual rotation between supporting member 31', 31" and first connecting bar 41 around two axes that can be orthogonal to one another and in turn orthogonal to the longitudinal direction of the first connecting bar 41. The first axis can coincide with the axis of the beam that, in the diagram of Fig.1, represents the supporting member 31', 31", while the second axis can be orthogonal to the plane defined by the supporting member and by the first connecting bar 41, when the forecarriage 1 is in neutral position, i.e., with zero tilting angle.

In Fig.1, the axes of mutual rotation between first connecting bar 41 and supporting members 31', 31" are indicated with 47', 49' and 47", 49" on the two sides of the forecarriage 1, respectively. The movement around the axes 47', 47" and 49', 49" allows the first connecting bar 41 and the supporting members 31', 31" to move with respect to one another when the wheels 13', 13" perform steering rotations and tilting movements.

In an intermediate position of its longitudinal direction, the first connecting bar 41 is connected to the steering column 5 by means of the interposition of a shock absorber assembly, indicated as a whole with 51.

In the diagram of Fig.1, the shock absorber assembly 51 is connected to the first connecting bar 41 by means of a mechanism with two degrees of freedom, schematically indicated with 53. The mechanism 53 allows the first connecting bar 41 and the shock absorber assembly 51 to rotate mutually around a first axis of rotation parallel to the longitudinal direction of the first connecting bar 41, and around a second axis of rotation, indicated with 55, orthogonal to the longitudinal direction of the first connecting bar 41 and lying on the center-line plane M of the forecarriage 1. The degree of freedom around the axis 55 allows the first connecting bar 41 to follow up-and-down movements different from one another of the two wheels 13', 13". The degree of freedom around the axis parallel to the first connecting bar 41 allows the shock absorber assembly 51 to rotate with respect to the first connecting bar 41 in dive movements, resulting from contraction of the shock absorber assembly 51, i.e., in the up-and-down movements of the wheels 13', 13" with respect to the uprights 23', 23".

In some embodiments, the first connecting bar 41 can comprise at least two portions positioned on the right and on the left of the central mechanism 53, hence on the two sides of the center-line plane M of the forecarriage frame, which are adapted to rotate with respect to one another around the axis of rotation parallel to the longitudinal direction of the first connecting bar 41.

At the opposite end with respect to the first connecting bar 41, the shock absorber assembly 51 is connected to the steering column 5 by means of a mechanism, indicated as a whole with 57. The mechanism 57 allows the shock absorber assembly 51 and the steering column 5 to perform mutual rotation movements around a first axis of rotation 59 parallel to the longitudinal direction of the shock absorber assembly 51, and around a second axis of rotation 61, orthogonal to the first axis of rotation 59 and substantially horizontal when the forecarriage frame is in neutral position, i.e., with the axes of rotation of the wheels 13', 13" horizontal and zero tilting angle.

Moreover, the mechanism 57 comprises a rigid connection 63 with one end 5A of the steering column 5. In the diagram of Fig.1, the rigid connection is schematically represented by a bracket.

The forecarriage 1 described above functions as follows. The steering movement of the wheels 13', 13" around the respective steering axes 35', 35" is obtained by turning the handlebar 7 around the axis A-A of the steering column 5. This movement is transmitted by means of the mechanism 57 to the shock absorber assembly 51 and from this, by means of the mechanism 53, to the first connecting bar 41. This latter transmits the motion imparted by the handlebar 7 to the two supporting members 31' and 31", which consequently rotate synchronously around the axes 35' and 35", respectively. Therefore, in this embodiment the first connecting bar 41 acts as steering bar.

The four-bar linkage 17 of the kinematic steering mechanism 15 allows the tilting movement, for example when the motor vehicle, to which the forecarriage 1 belongs, travels a curve, allowing the motor vehicle to tilt. When the motor vehicle tilts, the hinges 25', 25", 27', 27" of the four-bar linkage 17 allow deformation of said four-bar linkage, and the cross members 19, 21 rotate around the axes 19B, 21B defined by the hinges 19A, 21A. The wheels 13', 13" tilt, deviating from the vertical plane, following the tilting movement of the motor vehicle.

The single central shock absorber assembly 51 allows absorption and damping of the up-and-down movements of the wheels 13', 13", which entail rotation movements of the supporting members 31', 31" around the axes 39', 39". The up-and-down movements can be synchronous and equal in size for the two supporting members 31', 31" and respective wheels 13', 13", or different for the two supporting members 31', 31" and respective wheels 13', 13". An unequal movement for the two wheels can occur, for example, in a transitory phase, such as the phase after the vehicle has encountered an obstacle. Conditions of this kind can, for example, occur when one wheel encounters a dip or a bump in the ground.

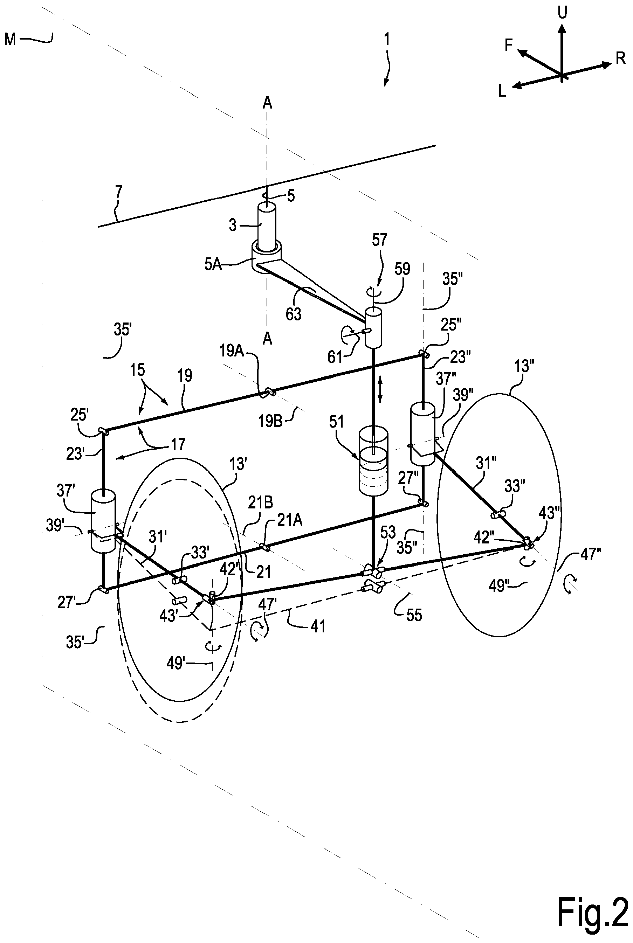

Fig.2 shows the kinematic diagram of Fig.1 in a condition in which the two wheels 13', 13" perform up-and-down movements different from one another. More in particular, the wheel 13' has been raised, for example as a result of a dip in the road surface, while the wheel 13" is traveling over a portion of smooth road surface. The condition illustrated in Fig.2 highlights a particular feature of the kinematic diagram of the forecarriage 1 of Figs.1 and 2. As the length of the first connecting bar 41 is fixed, when one of the two wheels (the wheel 13' in the example of Fig.2) undergoes an up-and-down movement, i.e., a rotation of the respective supporting member 31' or 31" around the axis 39' or 39", the other wheel (the wheel 13" in the example of Fig.2) undergoes a steering movement.

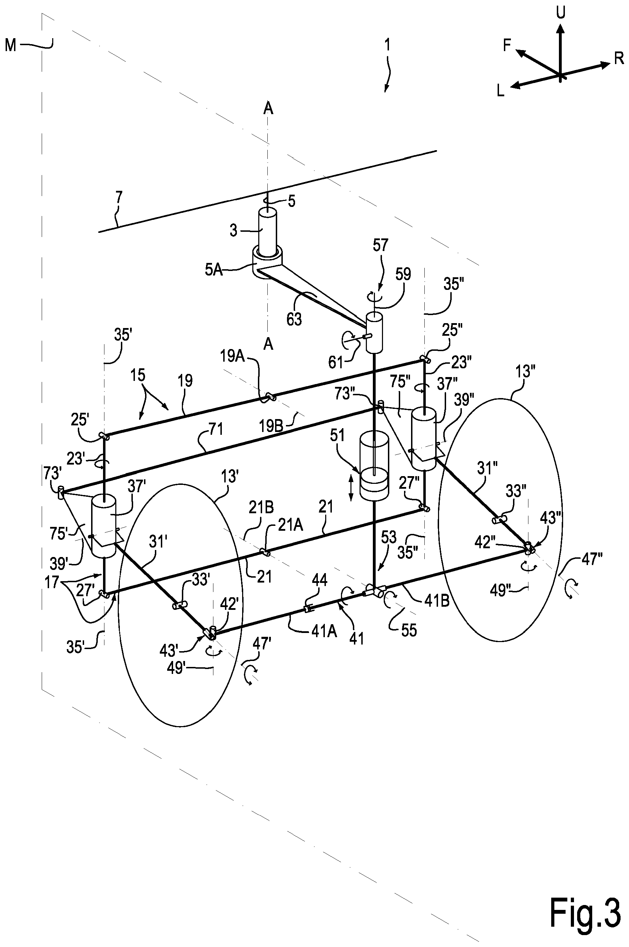

Fig.3 illustrates a kinematic diagram of an improved embodiment of the forecarriage 1, in which further improvements are provided. In Fig.3 the same numbers indicate the same or equivalent parts, components or elements to those of Fig. 1, which shall not be described again.

In the diagram of Fig.3 the first connecting bar 41 comprises two portions 41A and 41B, which are joined to one another by a joining element 44 adapted to allow a mutual movement of the two portions 41A, 41B with respect to the longitudinal axis of the first connecting bar 41, i.e., a lengthening and shortening movement of the first connecting bar 41. In this way, the first connecting bar 41 is extensible and the kinematic mechanism obtained is no longer affected by the constraint of constancy between the connection points of the supporting members 31', 31" to the first connecting bar 41. In the case of different up-and-down movements for the two wheels 13', 13", as schematically illustrated in Fig. 2, the first connecting bar 41 can be lengthened or shortened so that rotation of a supporting member 31', 31" around its axis 39', 39" does not impart a differentiated steering movement to the wheel supported by the other of the two supporting members 31', 31".

However, due to the degree of freedom introduced by the joining element 44 the steering movement controlled by the handlebar 7 cannot be transmitted by the first connecting bar 41 to both the wheels 13', 13". In the configuration of Fig.3, in particular, the steering movement is transmitted by means of the central shock absorber assembly 51 and the portion 41B of the first connecting bar 41 to the wheel 13", but cannot be transmitted to the wheel 13', due to the joining element 44 interposed between the portions 41A, 41B of the first connecting bar 41. This joining element, which makes the first connecting bar 41 extensible, introduces a factor of instability that does not allow direct transmission of the steering movement by the shock absorber assembly 51 to the wheel 13'.

To overcome this factor of instability, the forecarriage 1 of Fig.3 comprises a second connecting bar 71 substantially parallel to the first connecting bar 41. In the diagram of Fig.3 the first and the second connecting bars 41, 71 are positioned on opposite sides of the plane on which the four-bar linkage 17 lies, but this is not necessary and is mainly provided for a clearer conceptual representation of the kinematic mechanism as a whole. In other embodiments, the first connecting bar 41 and the second connecting bar 71 can be positioned on the same side of the plane on which the four-bar linkage 17 lies, for example both on the side of the driver or both on the opposite side.

The presence of two connecting bars 41, 71, one of which with variable length (the first connecting bar 41) and the other of fixed length and not influenced by the up-and-down or shaking movement of the wheels (second connecting bar 71) also allows advantages achievable with the configuration described in WO2017115274 to be obtained.

When the first connecting bar 41 and the second connecting bar 71 are on opposite sides of the plane on which the four-bar linkage 17 lies, the first can be on the side of the driver and the second on the opposite side, or vice versa.

The second connecting bar 71 is joined, by means of hinges 73' and 73" and brackets 75' and 75" to the sleeves 37' and 37". The hinges 73' and 73" allow mutual rotations, around axes parallel to the steering axes 35', 35", between the second connecting bar 71 and the brackets 75', 75". The brackets 75' and 75" are rigidly connected to the sleeves 37', 37" and move integrally therewith.

With the described arrangement, the steering movement is transmitted by the handlebar 7 to the wheel 13' by means of the second steering bar 71 as follows. By rotating, the steering column 5 causes the movement of the shock absorber assembly 51 along an arc of circumference centered on the axis of rotation A-A of the steering column 5. This movement is transmitted by means of the shock absorber assembly 51 and the portion 41B of the first connecting bar 41 to the wheel 13" and to its supporting member 31", which causes rotation of the sleeve 37" around the steering axis 35". The rotation of the supporting member 31" is transmitted, by means of the bracket 75", the second connecting bar 71 and the bracket 75', to the sleeve 37'. Consequently, this latter rotates around its steering axis 35', causing rotation of the supporting member 31' and of the wheel 13' around the aforesaid steering axis 35'.

In substance, the steering movement is transmitted to the two wheels 13', 13" by means of the combined action of the first connecting bar 41 and of the second connecting bar 71, which both act as steering bars, in combination with one another.

In other embodiments, not shown, the first connecting bar 41 can be divided into three portions, by means of two joining elements 44 positioned one between the wheel 13' and the connection point of the shock absorber assembly 51 to the first connecting bar 41, and the other between the connection point of the shock absorber assembly 51 to the first connecting bar 41 and the wheel 13". A further transmission element of the movement of the steering column 5 connects the steering column 5 to the second connecting bar 71. In this case the second connecting bar 71 acts as sole steering bar, which is not influenced by the up-and-down movement of the wheels 13', 13". The first connecting bar 41 connects the supporting members 31', 31" of the wheels 13', 13" to the central shock absorber assembly 51 and by means of the shock absorber assembly 51 allows damping of the up-and-down movements of the two wheels 13', 13".

Therefore, in this case the second connecting bar 71 acts as a steering bar, while the first connecting bar 41 acts as a transmission component of the up-and-down motion of the wheels 13', 13" to the shock absorber assembly 51.

Advantageously, the second connecting bar 71 can be provided with means for adjusting toe-in of the pair of front wheels, of known type. Additionally, also the first connecting bar can comprise adjusting means only on the side of the controlled wheel to ensure that the distance between the hinges that allow tilting is correct, i.e., is equal to the distance between the corresponding tilting hinges measured on the horizontal elements (rocker arms) of the four-bar linkage.

The forecarriage 1 described above can be provided with a device for blocking the tilting movement, of known type. This device is particularly useful for blocking the tilting movement (in substance the movement of the four-bar linkage) when the motor vehicle, on which the forecarriage 1 is mounted, is at a standstill, for example at traffic lights, or is traveling at low speed. By blocking the tilting movement, the motor vehicle remains stably in vertical position, without the driver requiring to support it by placing a foot on the ground, even when stopped. In practice, when the vehicle is stopped, and optionally travelling very slowly, with the device for blocking the tilting movement inserted it cannot perform tilting movements, while dive movements, i.e., pitch movements, are instead still possible, which involve a compression and extension of the shock absorber assembly. At higher speeds, when the device for blocking the tilting movement is deactivated, the motor vehicle behaves like a two-wheeled vehicle.

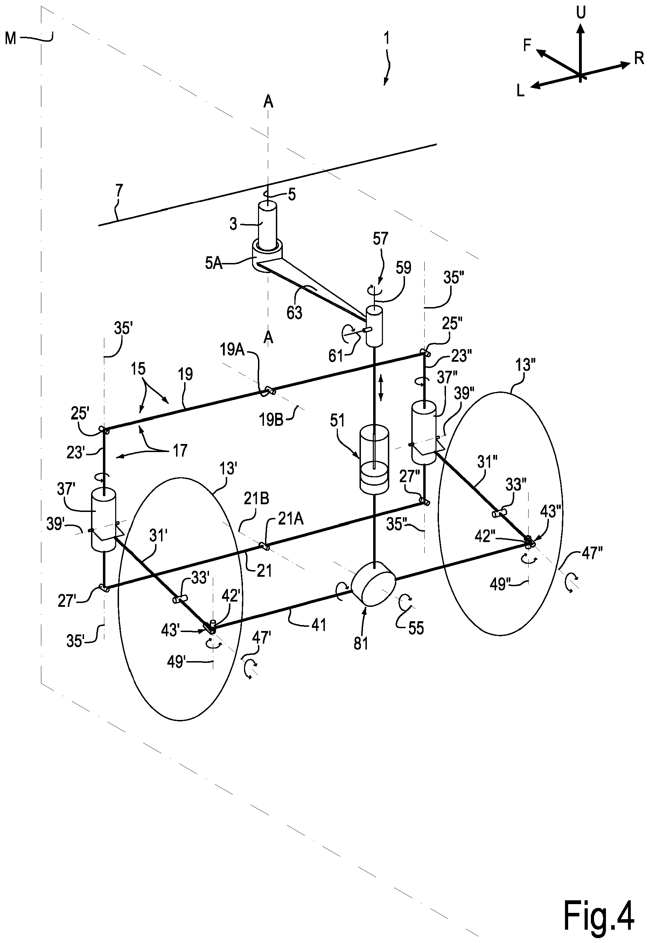

In particularly advantageous embodiments, the forecarriage described herein can have a device for blocking the tilting movement that blocks movement of the four-bar linkage 17, but does not block operation of the shock absorber assembly 51. Fig. 4 shows an embodiment of the forecarriage 1 similar to that of Fig.1, in which a device for blocking the tilting movement is provided, indicated with 81. The same or equivalent elements, parts or components as those of Fig.1 are indicated with the same reference numbers and shall not be described again.

The device for blocking the tilting movement 81 can be configured as described in WO2017/115296, the content of which is fully incorporated in the present description. In practice, the device for blocking the tilting movement 81 comprises a mutual blocking member of the first connecting bar 41 and of the shock absorber assembly 51, said blocking member preventing (when activated) a relative rotation movement around the axis 55 between the shock absorber assembly 51 and the first connecting bar 41. This makes mutual rotation of the elements that form the four-bar linkage 17 impossible and hence prevents the tilting movement.

However, as is apparent from the diagram of Fig.4, when the device for blocking the tilting movement 81 is activated, the shock absorber assembly 51 is still able to perform a pitch, i.e., dive, movement. This makes driving the motor vehicle easier even at low speeds, when the tilting movement is blocked. In particular, the shock absorber assembly 51 allows dive movements (compression of the shock absorber assembly 51) even when the motor vehicle is at a standstill or almost at a standstill.

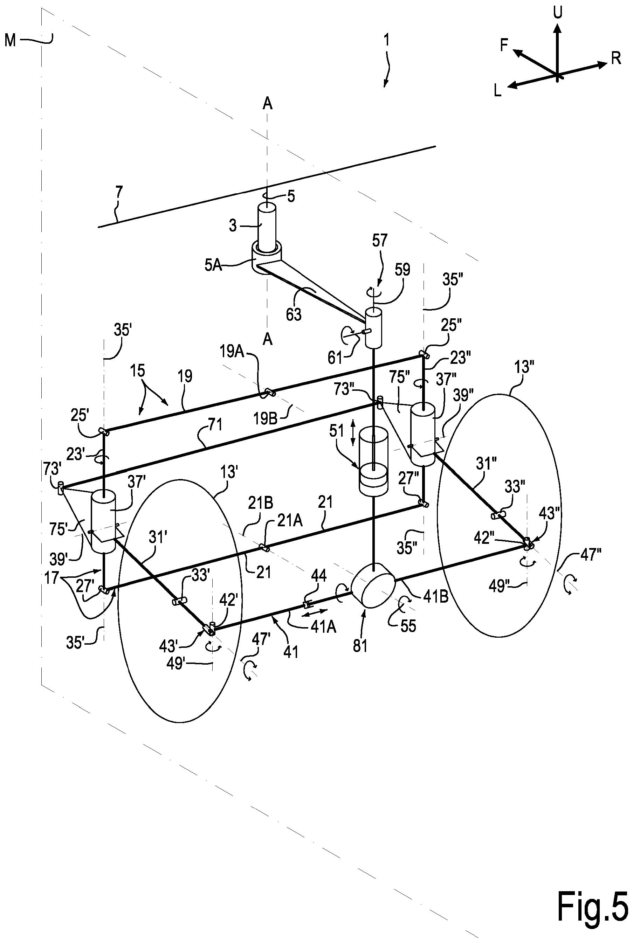

The device for blocking the tilting movement 81 can also be applied in a configuration of the type illustrated in Fig.3. This embodiment is illustrated in Fig.5, where the same elements, parts and components as those of the previous embodiments are indicated with the same reference numbers.

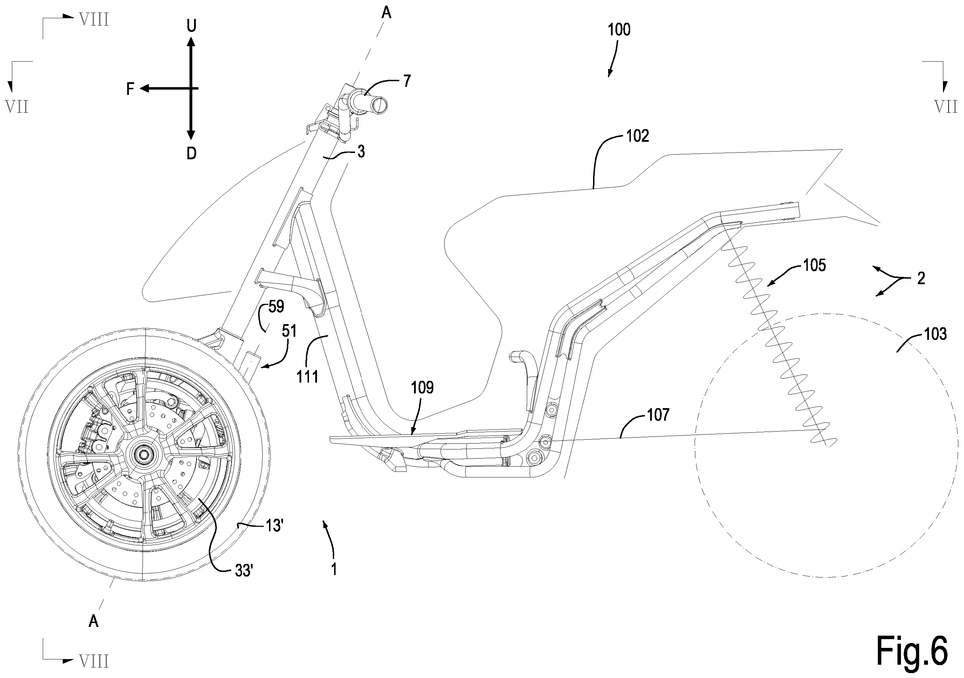

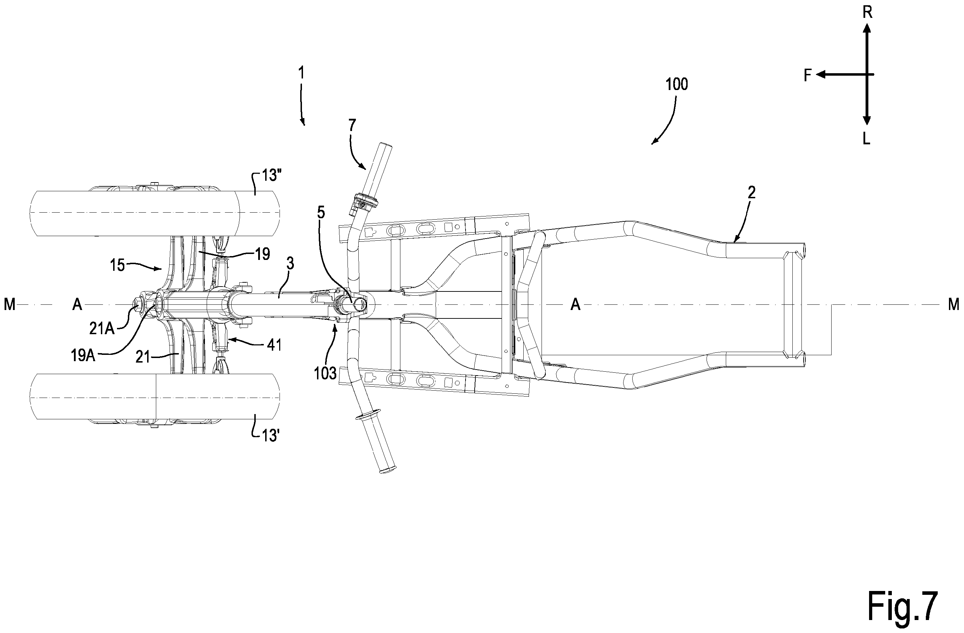

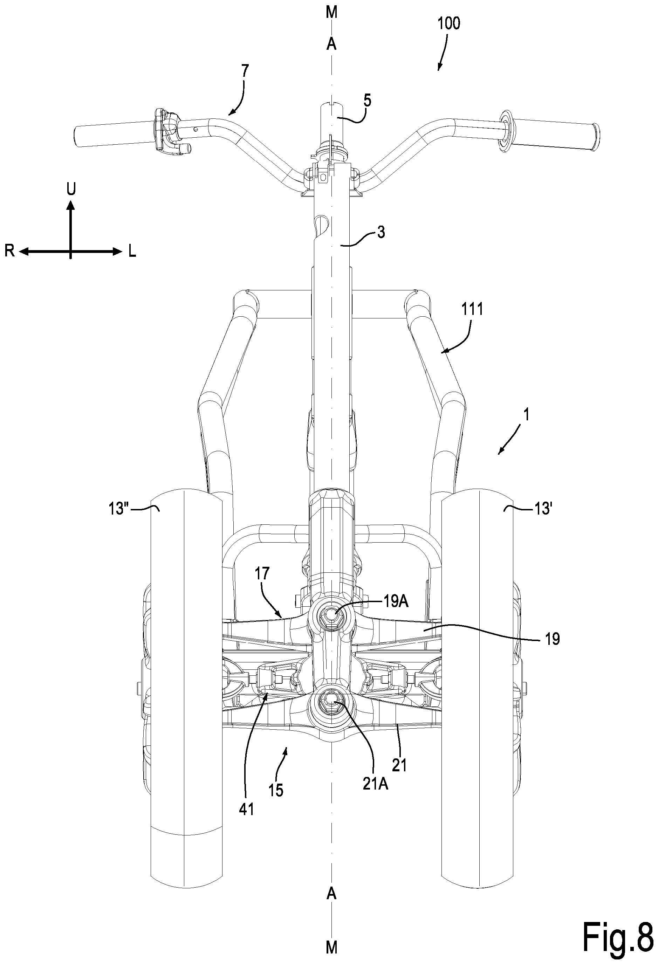

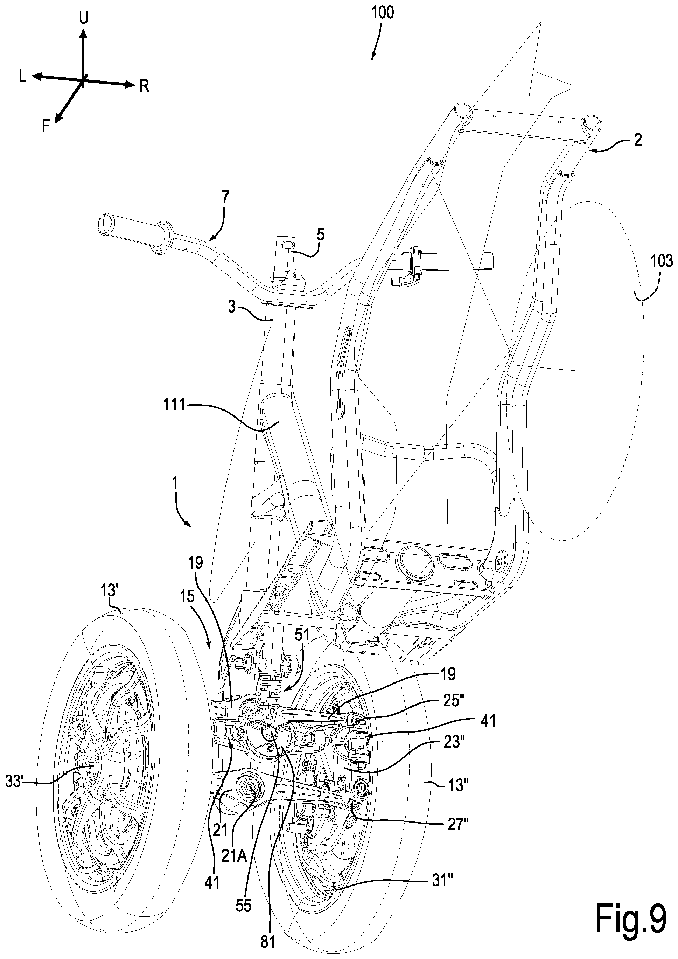

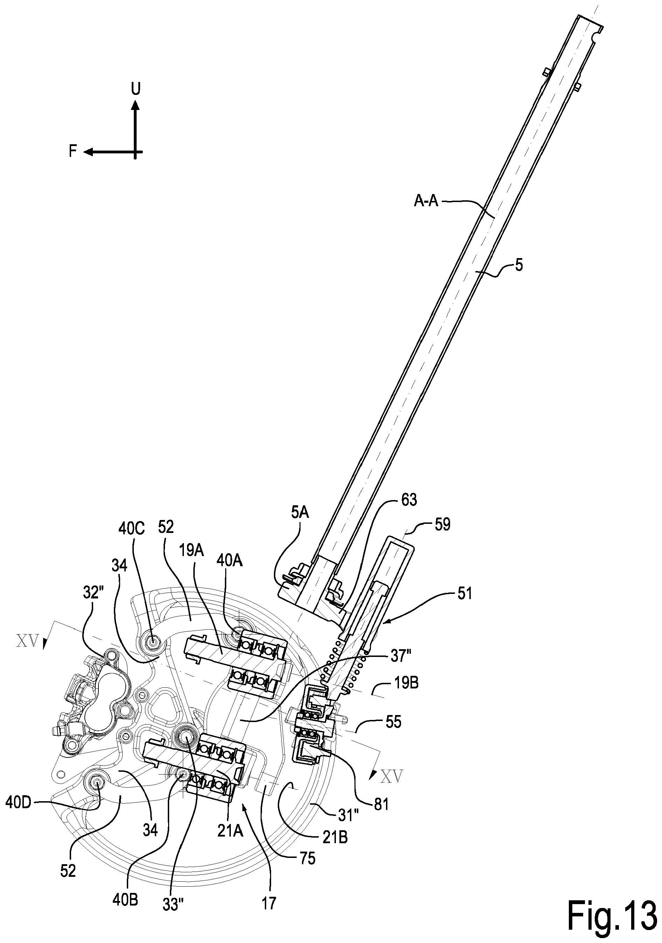

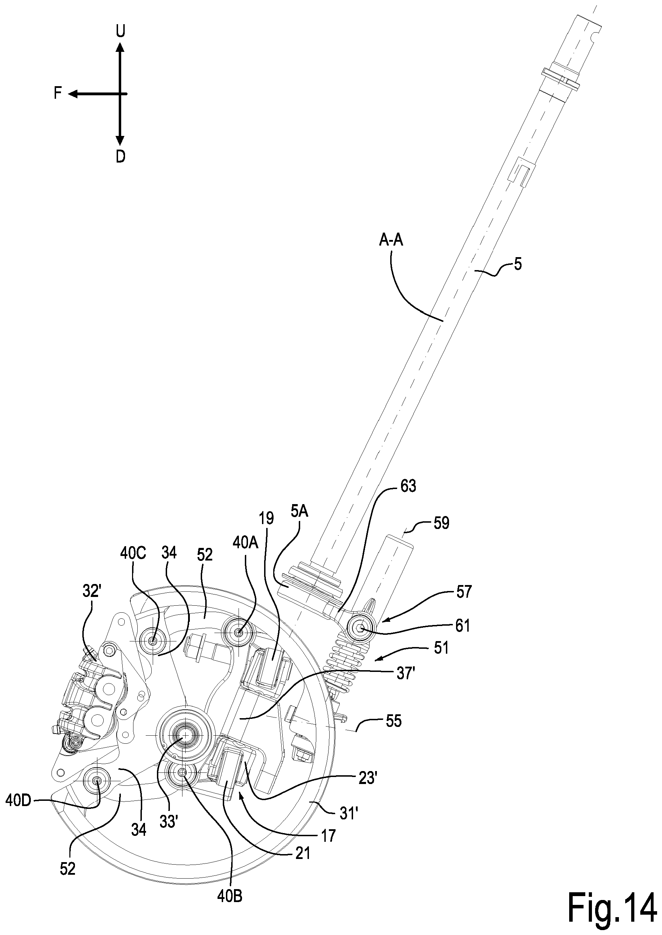

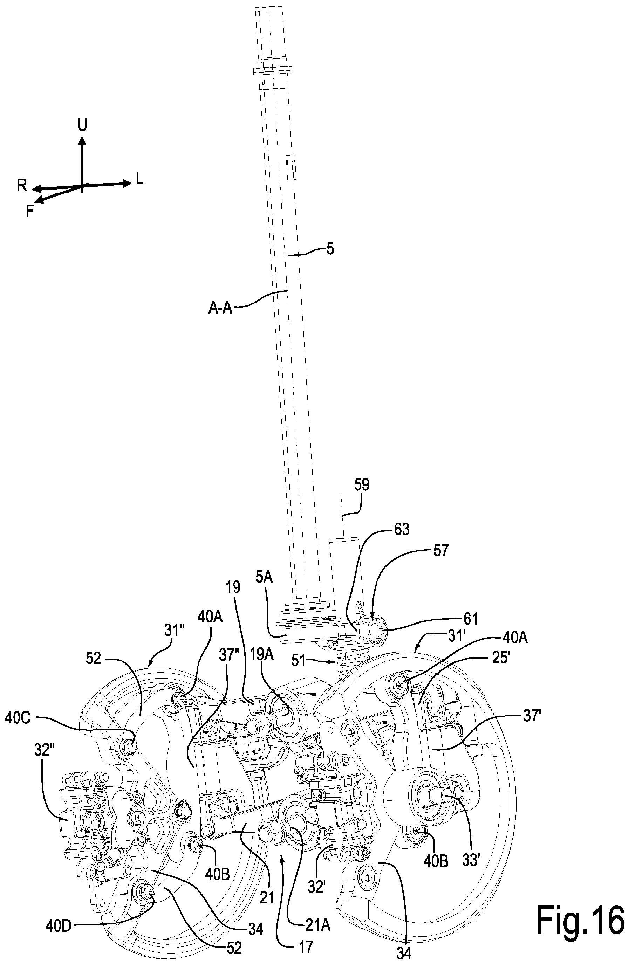

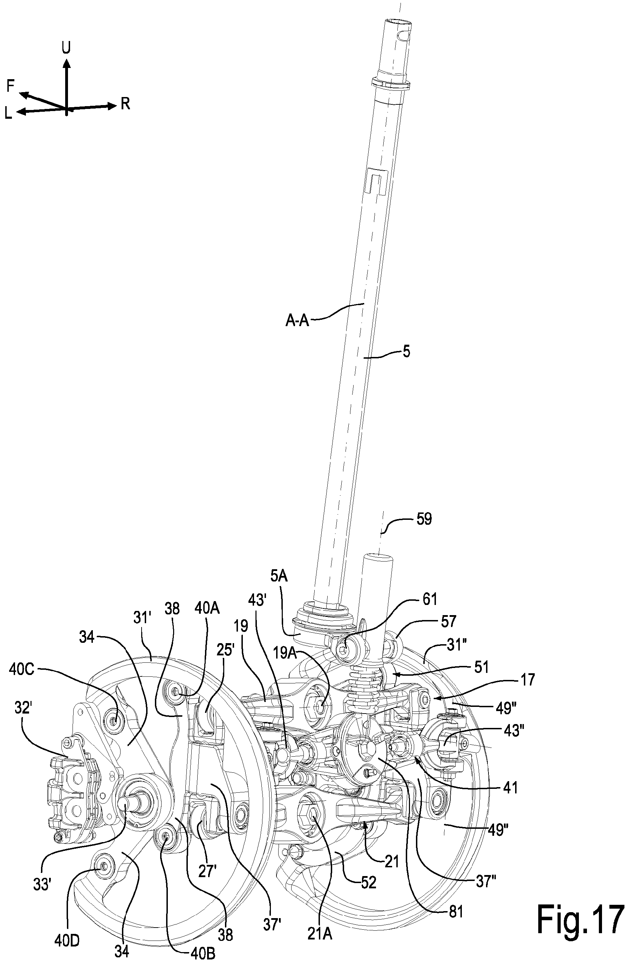

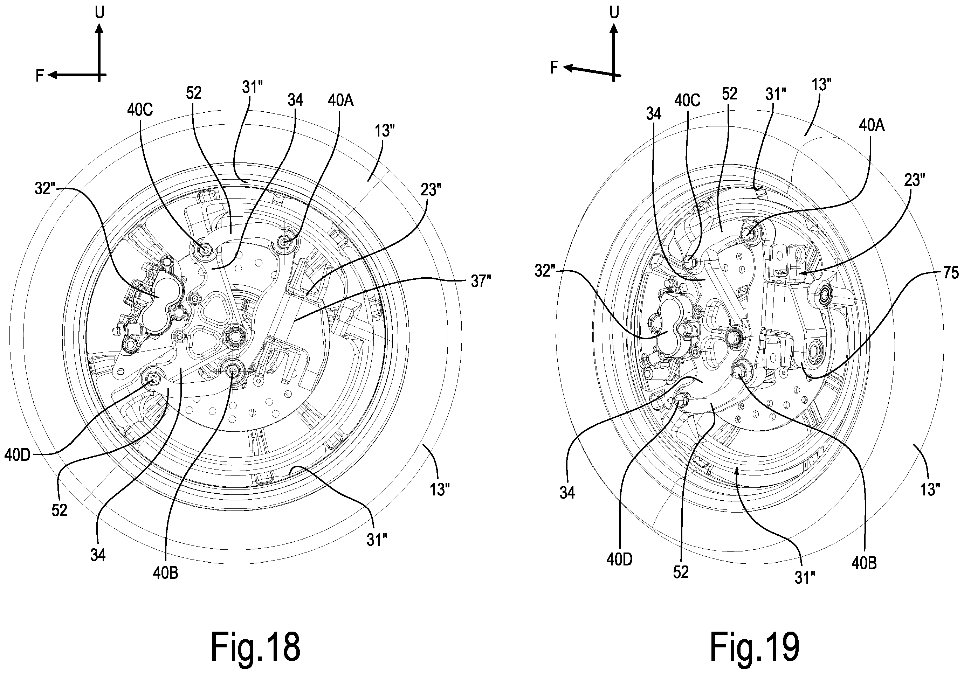

### Embodiment of Figs. 6 to 19

Figs. 6 to 19 show a practical embodiment of a three-wheeled motorcycle in the form of a scooter, which comprises a steering device produced according to the kinematic configuration illustrated in the diagram of Fig.4. The same numbers indicate components corresponding to parts or elements already illustrated in Fig. 4.

Figs. 6 to 9 illustrate the motorcycle as a whole, indicated with 100. Body parts have been omitted to show the kinematic mechanisms concerned by the present disclosure. Reference number 102 schematically indicates a saddle of the motorcycle 100. Reference number 1 once again indicates the forecarriage, and reference number 2 indicates the rear section of the motorcycle 100. The rear section is shown schematically, and can take any suitable form. It supports a rear driving wheel 103, operated by an engine, not shown. The driving wheel 103 can be associated with a shock absorber assembly, generically and schematically labelled 105, and can be supported by a fork, schematically labelled 107, hinged to the frame, indicated as a whole with 109, of the motorcycle 100. The frame 109 comprises a forecarriage frame 111, to which the kinematic steering mechanism 15 that embodies the kinematic diagram of Fig.4 is connected in the manner described below. More in particular, the forecarriage frame 111 comprises a steering column tube 3, in which a steering column 5, integral with a handlebar or steering wheel 7, rotates. The steering column 5 is rotatable around an axis of A-A upon control of the driver by means of the handlebar 7.

A first front steered wheel 13' and a second front steered wheel 13" are associated with the forecarriage 1. Just as in the description above of the kinematic diagrams of Figs. 1 to 5, hereinafter components, assemblies or elements symmetrical with respect to a center-line plane M of the forecarriage 1 are also indicated with the same reference number followed by an apostrophe (') for elements on one side of the center-line plane M, for example the left side of the driver, and with two apostrophes (") for elements on the other side of the center-line plane M, for example the right side of the driver.

Number 15 indicates as a whole the kinematic steering mechanism that allows the front steered wheels 13' and 13" to perform synchronous steering and tilting movements.

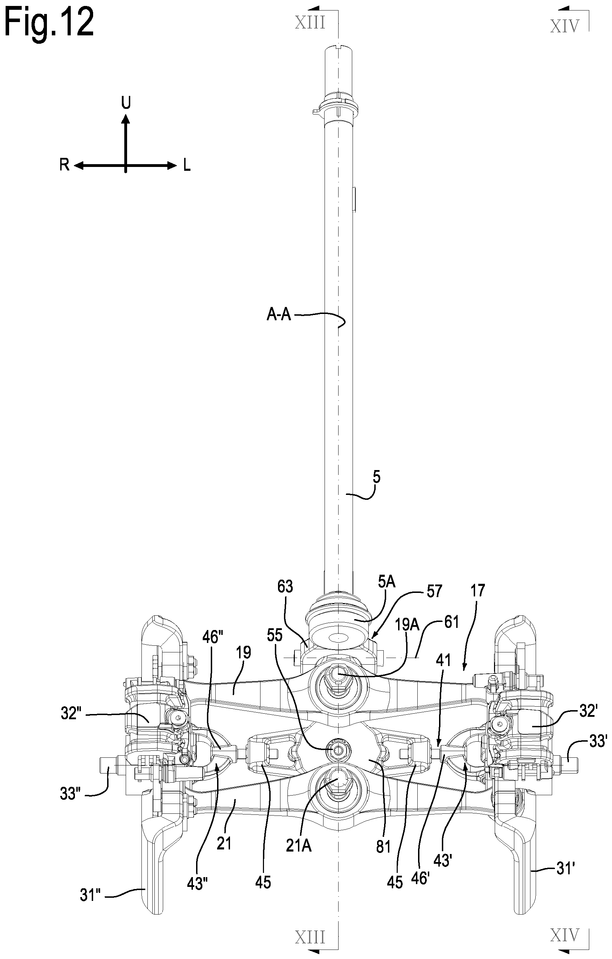

The kinematic steering mechanism 15 comprises a four-bar linkage 17 which has a first upper cross member 19 and a second lower cross member 21, substantially parallel to one another. The two cross members 19, 21 are hinged to the forecarriage frame 111 in 19A and 21A by means of respective mid-position hinges. Moreover, the four-bar linkage 17 comprises two uprights 23' and 23" on the two sides of the forecarriage 1. The uprights are visible in particular in the views of Figs. 12 to 17. The reference numbers 25', 27' and 25", 27" indicate hinges on the two sides of the forecarriage 1, with which the uprights 23' and 23" are hinged to the cross members 19, 21. The hinges 25', 25" and 27', 27" define mutual axes of rotation of the cross members 19, 21 and of the uprights 23', 23", which are parallel to the axes 19B and 21B of rotation of the cross members 19, 21 with respect to the forecarriage frame 111.

In the illustrated embodiment, the four-bar linkage 17 is arranged approximately at the height of the two wheels 13', 13", i.e., is arranged between the front steered wheels of the vehicle.

The kinematic steering mechanism 15 comprises, besides the four-bar linkage 17, a pair of supporting members 31' 31" that rotatingly support the wheels 13' and 13", respectively. Each supporting member 31', 31" supports the journal 33', 33" of the respective wheel 13', 13" and other mechanical components, for example the brakes 32', 32". In the embodiment of Figs. 6 to 20 the supporting members 31', 31" are in the form of partial annular bodies, i.e., which extend for less than 360°, and which have two spokes 34 that join the journals 33', 33" of the wheels to the respective partial annular bodies.

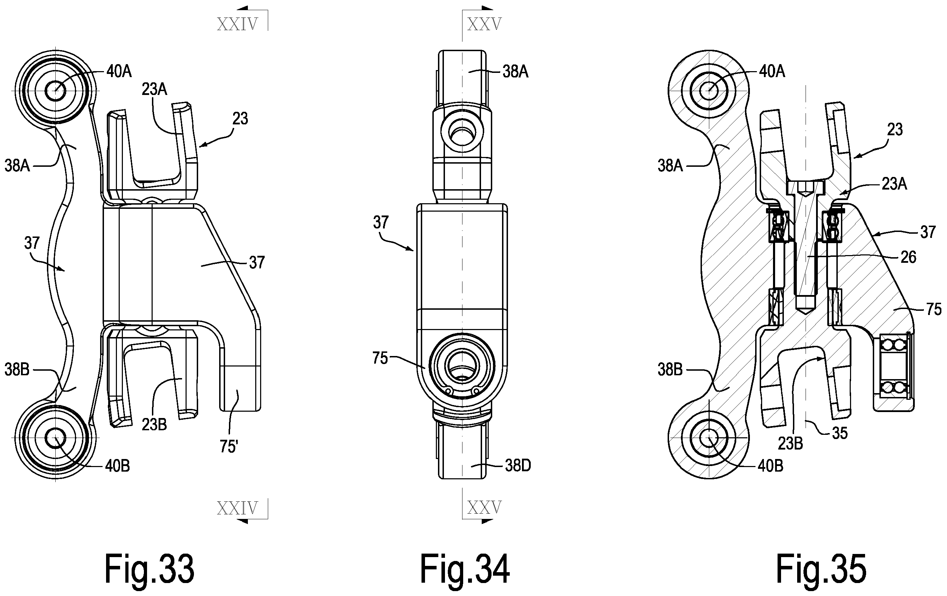

Each supporting member 31', 31" of the wheels 13', 13" is connected to the respective upright 23', 23" of the four-bar linkage 17 so as to be able to rotate around the respective steering axis 35', 35". Each steering axis 35', 35" coincides with a longitudinal axis of the respective upright 23', 23" (see also Fig.35), i.e., with an axis extending parallel to the prevalent longitudinal direction of the upright 23', 23". The mutual rotation between upright 23', 23" and supporting member 31', 31" can be obtained, for example, by means of a sleeve 37', 37" mounted around the upright 23', 23" and to which the respective supporting member 31', 31" is in turn connected, with the possibility of relative movement between supporting member 31', 31" and sleeve 37', 37", to allow the up-and-down movement of the wheel.

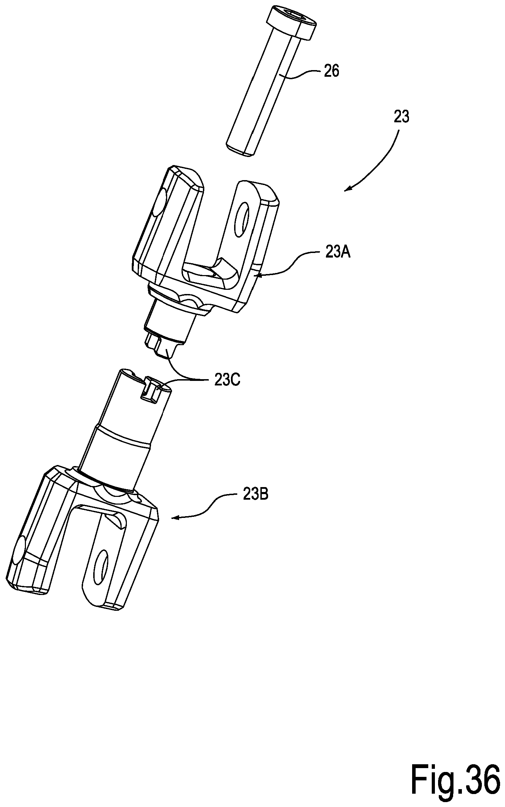

An embodiment of the upright 23', 23" and of the sleeve 37' 37" is shown in detail in Figs. 33 to 36. In these figures upright and sleeve are indicated with 23, 37. Each upright 23 comprises two portions 23A, 23B couplable to one another by means of a screw 26. Each portion 23A, 23B comprises a fork body that forms part of the respective hinge 25 and 27, respectively. The two portions 23A, 23B are joined at toothed profiles 23C that define a relative angular position between the two parts 23A, 23B.

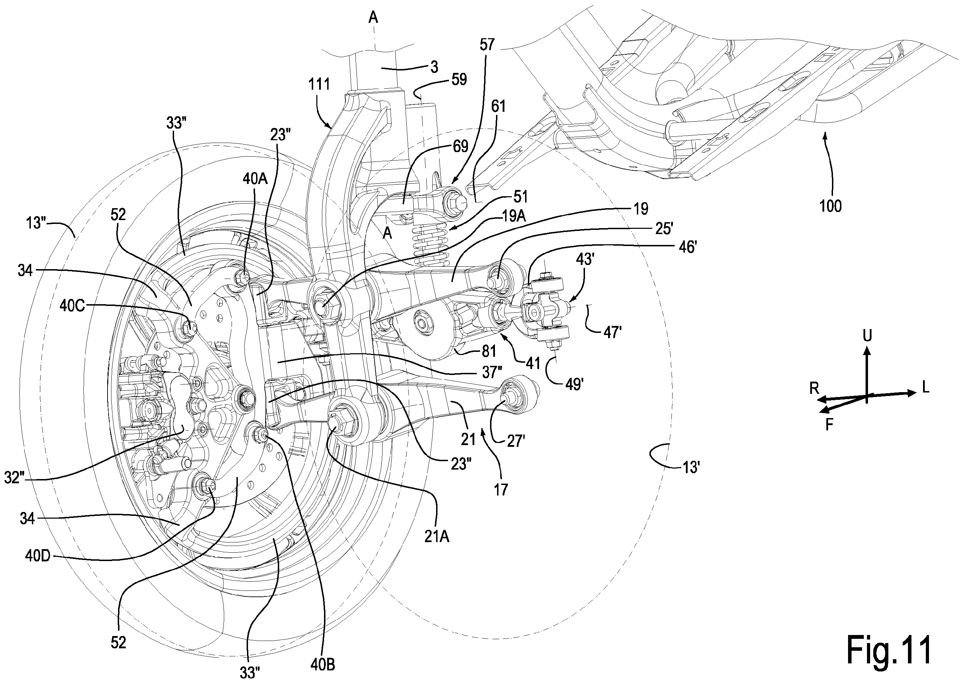

As is shown in Figs. 33-35, each sleeve 37', 37" has expansions 38A, 38B that form hinges 40A, 40B for the articulation of two rocker arms 52, visible in particular in Figs. 11, 13-16, 18 and 19, which form part of the supporting members 31', 31", i.e. provide the connection to the respective sleeves 37', 37". The rocker arms 52 are hinged in 40A and 40B to the expansions 38A, 38B and in 40C and 40D to the main body of the respective supporting member 31', 31". In practice, each supporting member 31', 31" including the relevant rocker arms 52 forms, together with the respective sleeve 37', 37", a suspension four-bar linkage, the function of which is the same as that of the hinge that embodies the axis 39', 39" in the kinematic diagram of Fig.4. In practice, by means of the rocker arms 52 of each supporting member 31', 31" of the wheel 13' and 13" respectively, the up-and-down movement of said wheel is allowed. While in the simplified kinematic diagram of Figs. 1 to 5 the up-and-down movement of the supporting members 31', 31" is represented as a rotation movement around the axes 39', 39", in the embodiment of Figs. 6 to 19 the movement of the supporting members 31', 31" is a roto-translation movement obtained by rotation of the rocker arms 52 around the respective hinges 40A, 40B for connecting to the sleeve 37. These latter define parallel axes, each forming in practice a springing axis of the respective supporting member 31', 31".

When the rocker arms 52 pivot around the hinges 40A, 40B the supporting members 31', 31" move in a plane that, when the vehicle 100 is in neutral position (i.e., vertical without leaning caused by tilting), it is in vertical position. The simultaneous roto-translation movement of the two supporting members 31', 31" around the hinges 40A, 40B results in a pitch movement of the vehicle 100. The roto-translation movement of the supporting members 31', 31" corresponds to the up-and-down motion of the wheels, which can be different for the left wheel and the right wheel.

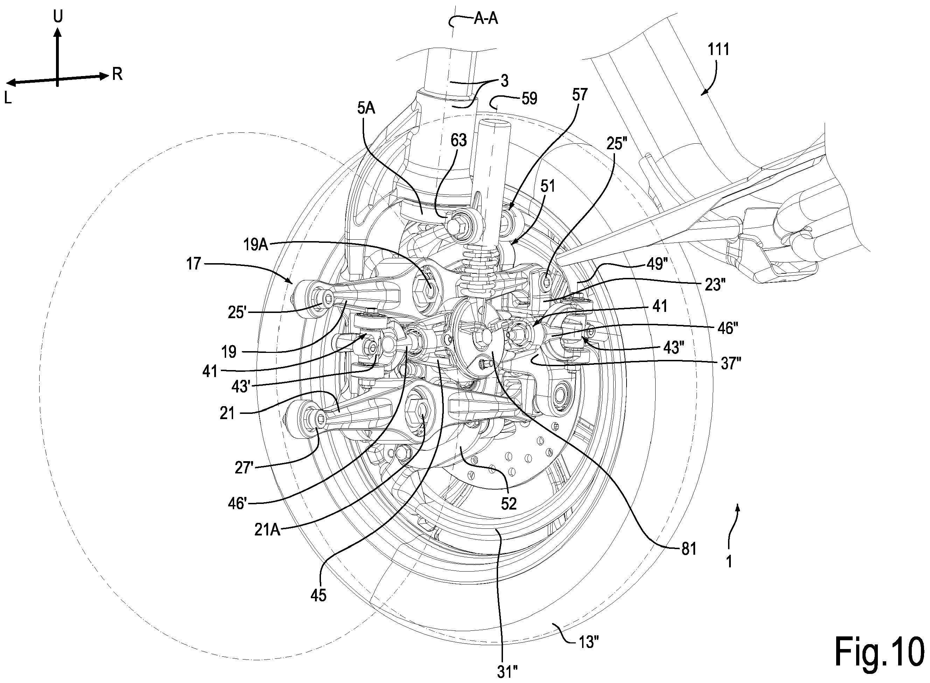

The kinematic steering mechanism 15 comprises, besides the supporting members 31', 31" of the wheels 13', 13" and the four-bar linkage 17, a first connecting bar 41, with two ends connected to the first supporting member 31' and to the second supporting member 31", respectively. In the embodiment of Figs. 6 to 19, just as in the diagram of Fig.4, the first connecting bar 41 acts as a steering bar and transmits to the wheels 13', 13" the steering movement around the steering axes 35' and 35", Each end (labelled 42', 42" in the diagram of Figs. 1 to 5 and not marked in the subsequent figures) of the first connecting bar 41 is connected to the respective supporting member 31' 31" by means of a respective mechanism with two degrees of freedom indicated with 43' and 43". These two degrees of freedom allow a mutual rotation between supporting member 31', 31" and first connecting bar 41 around two axes orthogonal to one another and orthogonal to the longitudinal direction of the first connecting bar 41. The first axis is indicated with 47', 47" in particular in Figs. 10, 11 and 15, while the second axis is indicated with 49'and 49" (Figs. 10 and 11).

The movement around the axes 47', 47" and 49', 49" allows the first connecting bar 41 and the supporting members 31', 31" of the wheels 13', 13" to move with respect to one another when the wheels 13', 13" perform steering rotations and tilting movements.

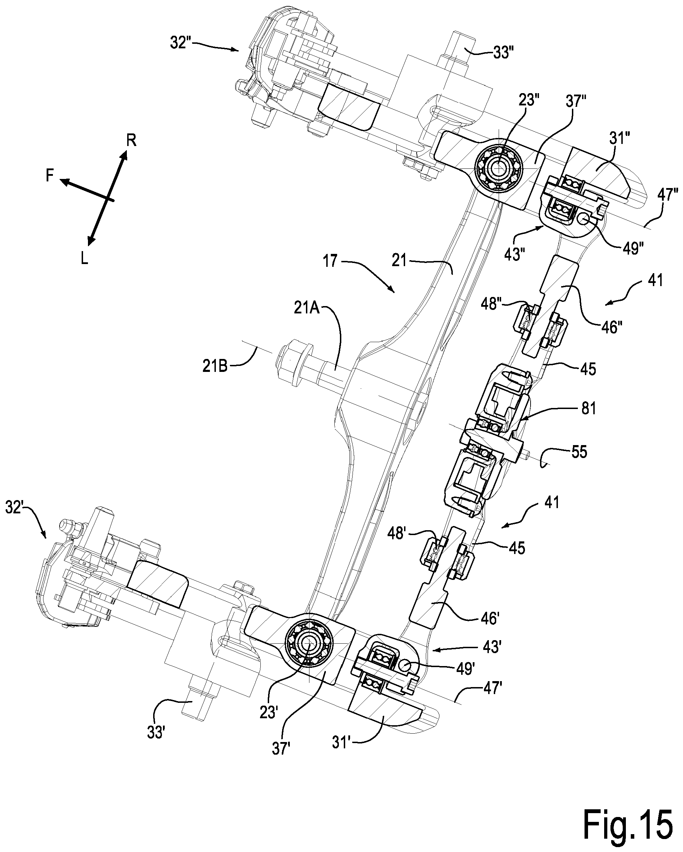

As can be seen in particular in the section of Fig.15, in this embodiment the first connecting bar 41 is made of three parts and more precisely: an intermediate, or central, part or portion 45 and two end parts or portions 46', 46". The end parts 46', 46" are joined to the central part 45 by means of radial bearings 48', 48". In this way, each end mechanism 43', 43" of the first connecting bar 41 has a further degree of freedom with respect to the central part 45, i.e., it is able to rotate around an axis coincident with the longitudinal direction of the first connecting bar 41. This allows compensation of any dimensional tolerances in the construction of the parts that form the kinematic steering mechanism 15. However, the length of the first connecting bar 41 is fixed as none of the parts 45, 46', 46" of which it is formed can slide with respect to one another.

In an intermediate position of its longitudinal direction, the first connecting bar 41 is connected to the steering column 5 by means of the interposition of a shock absorber assembly, indicated as a whole with 51. In the embodiment of Figs. 6 to 19, the connection between steering column and first connecting bar is provided on the central or intermediate part 45.

The shock absorber assembly 51 is connected to the first connecting bar 41 by means of a mechanism with two degrees of freedom, which allows the first connecting bar 41, or more precisely the ends thereof, and the shock absorber assembly 51 to rotate mutually around a first axis of rotation parallel to the longitudinal direction of the first connecting bar 41, and around a second axis of rotation, indicated with 55, orthogonal to the longitudinal direction of the first connecting bar 41 and lying on the center-line plane M of the forecarriage 1. The axis 55 is indicated in particular in Figs. 12 to 15. The first of the two degrees of freedom is in practice provided by means of the bearings 48', 48". The degree of freedom around the axis 55 allows the first connecting bar 41 to follow up-and-down movements of the two wheels 13', 13" different from one another. The degree of freedom around the axis parallel to the first connecting bar 41 allows the shock absorber assembly 51 to rotate with respect to the first connecting bar 41, or more precisely with respect to the parts 46', 46" thereof, in the dive movements, resulting from contraction of the shock absorber assembly 51, i.e., in the up-and-down movements of the wheels 13', 13" with respect to the uprights 23', 23".

At the opposite end with respect to the first connecting bar 41 the shock absorber assembly 51 is connected to the steering column 5 by means of a mechanism indicated as a whole with 57. The mechanism 57 allows the shock absorber assembly 51 and the steering column 5 to perform mutual rotation movements around a first axis of rotation 59 (see Figs. 11 to 17) parallel to the longitudinal direction of the shock absorber assembly 51, and around a second axis of rotation 61, orthogonal to the first axis of rotation 59 and substantially horizontal when the forecarriage frame 111 is in neutral position, i.e., with the axes of rotation of the wheels 13', 13" horizontal and zero tilting angle.

Moreover, the mechanism 57 comprises a rigid connection 63 with one end 5A of the steering column 5.

Reference number 81 indicates a device for blocking the tilting movement, known and not described. As indicated with reference to the embodiment of Fig.4, in practice the device 81 comprises a mutual blocking member of the first connecting bar 41 and of the shock absorber assembly 51; this blocking member prevents - when activated - a movement of relative rotation around the axis 55 between the shock absorber assembly 51 and the first connecting bar 41. This makes mutual rotation of the elements forming the four-bar linkage 17 impossible and hence prevents the tilting movement of the vehicle 100. However, when the device for blocking the tilting movement 81 is activated, the shock absorber assembly 51 is still able to perform a pitch movement, i.e. a dive movement.

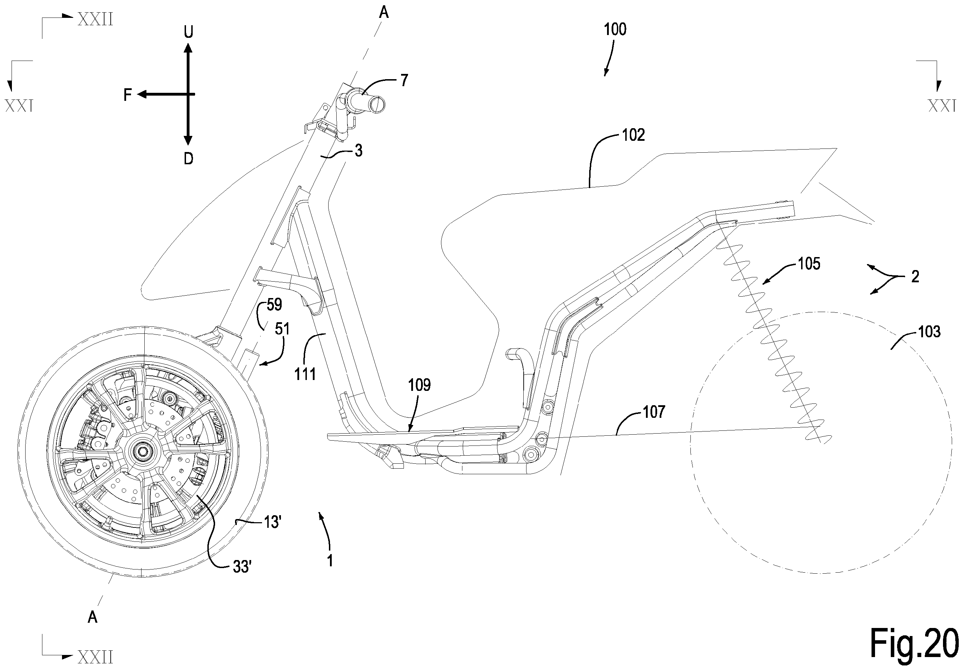

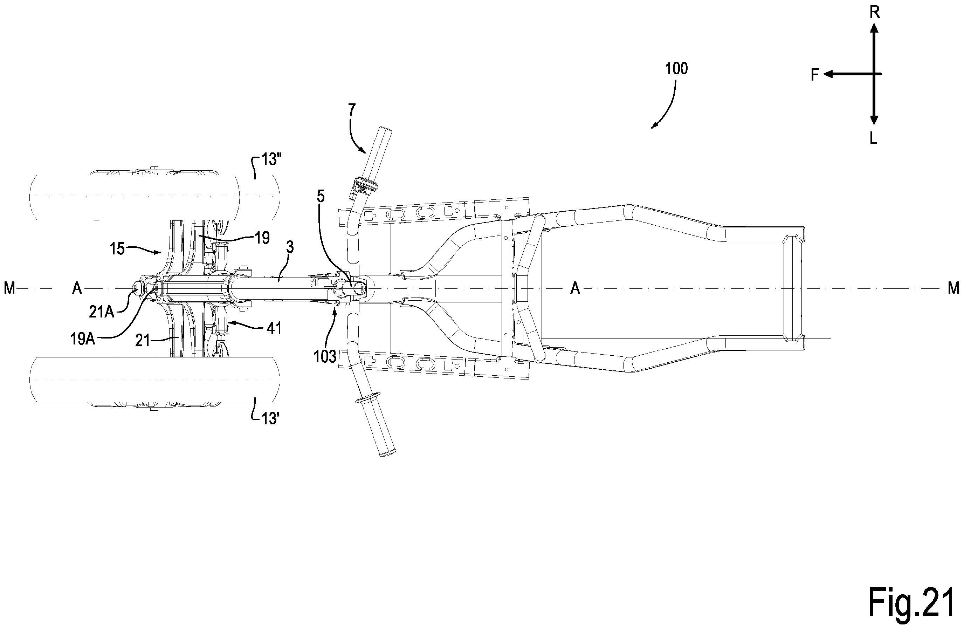

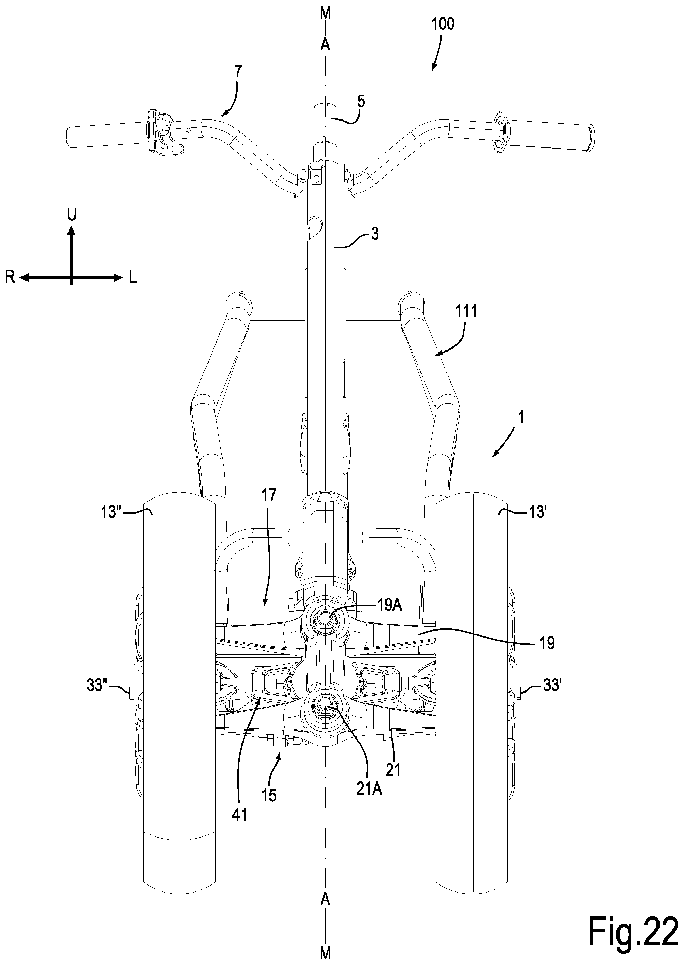

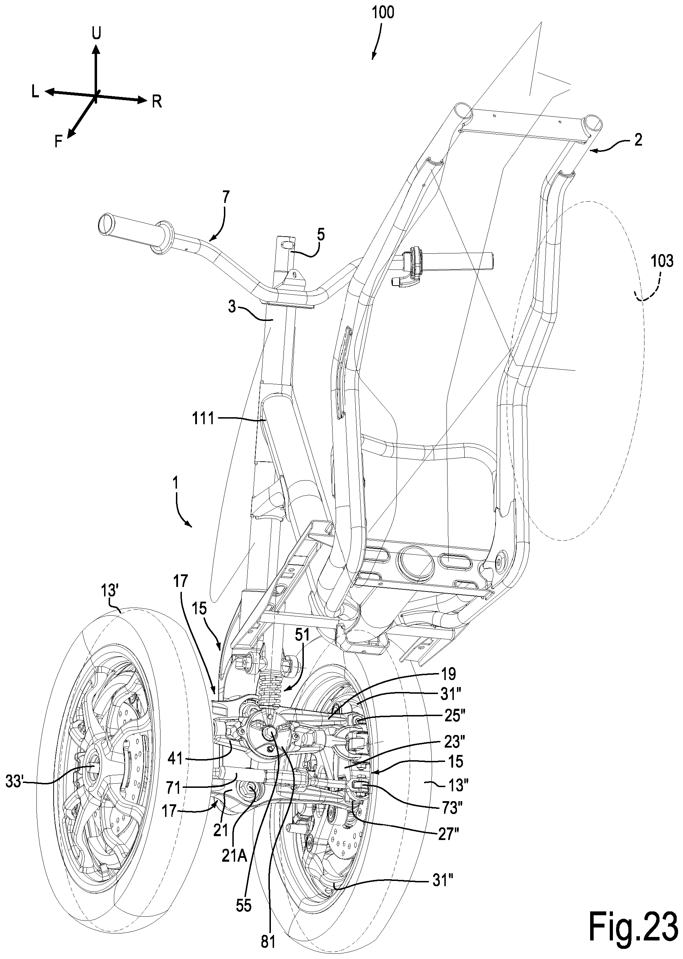

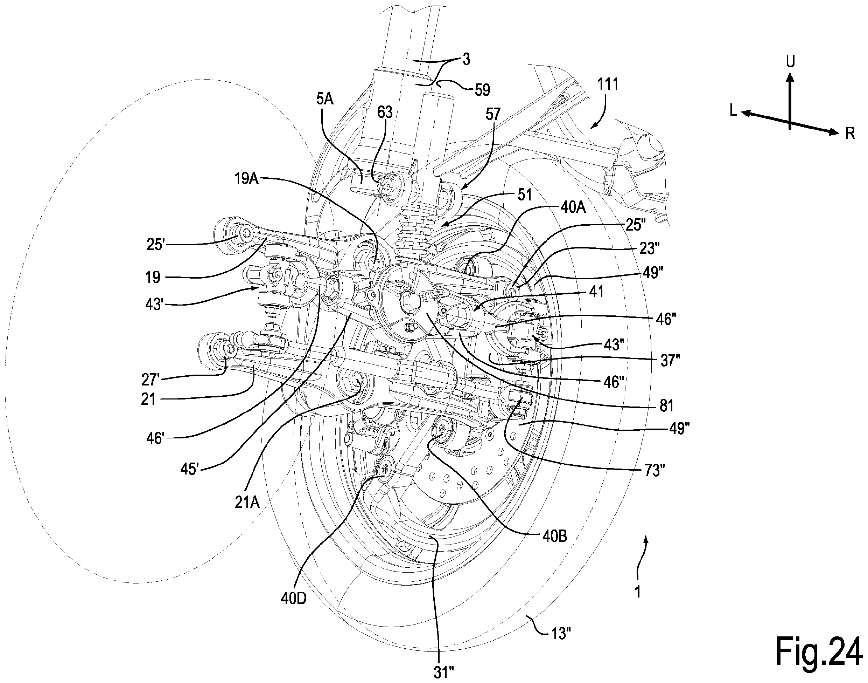

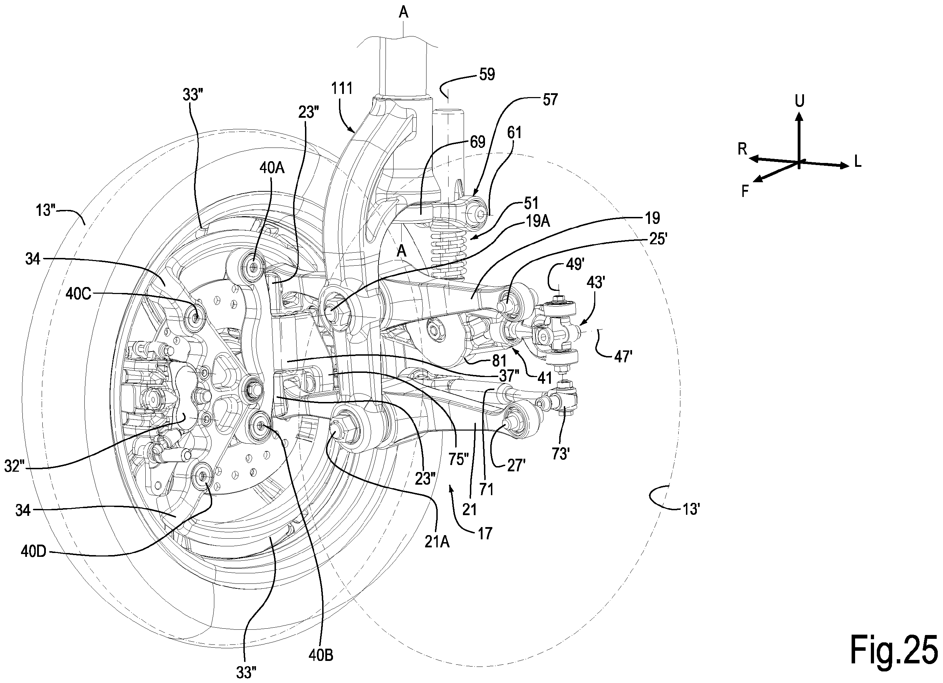

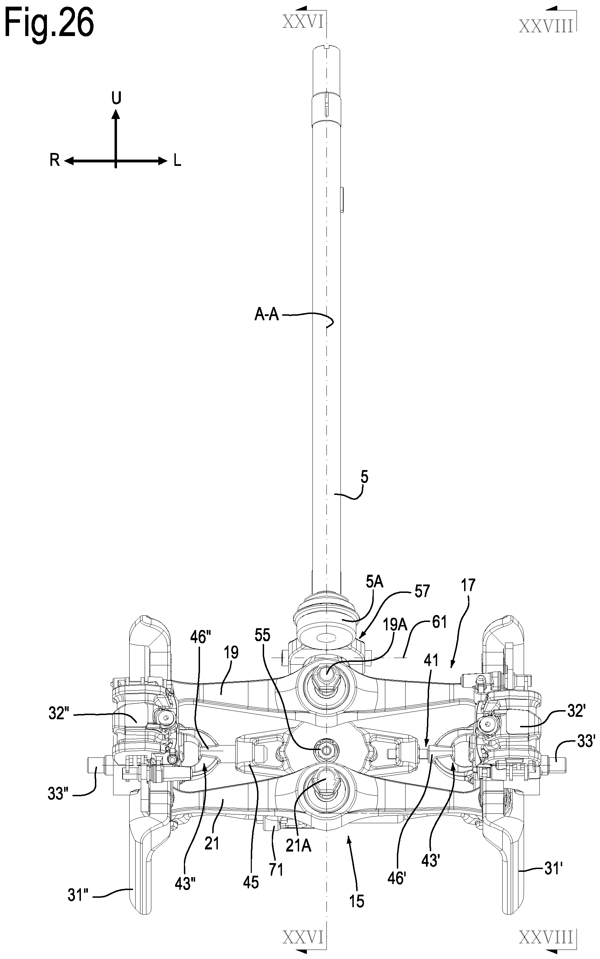

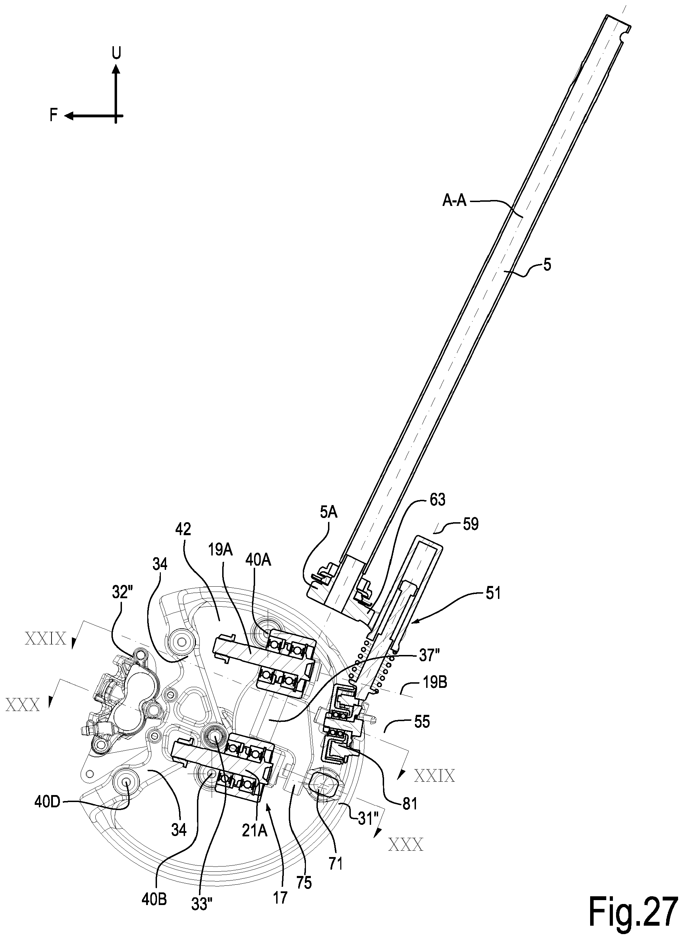

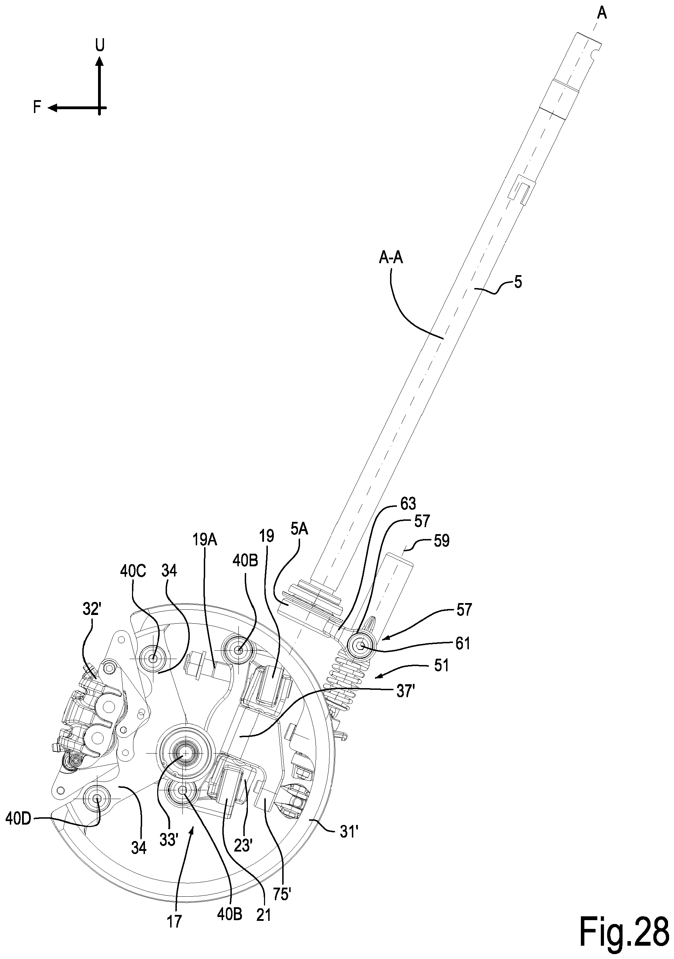

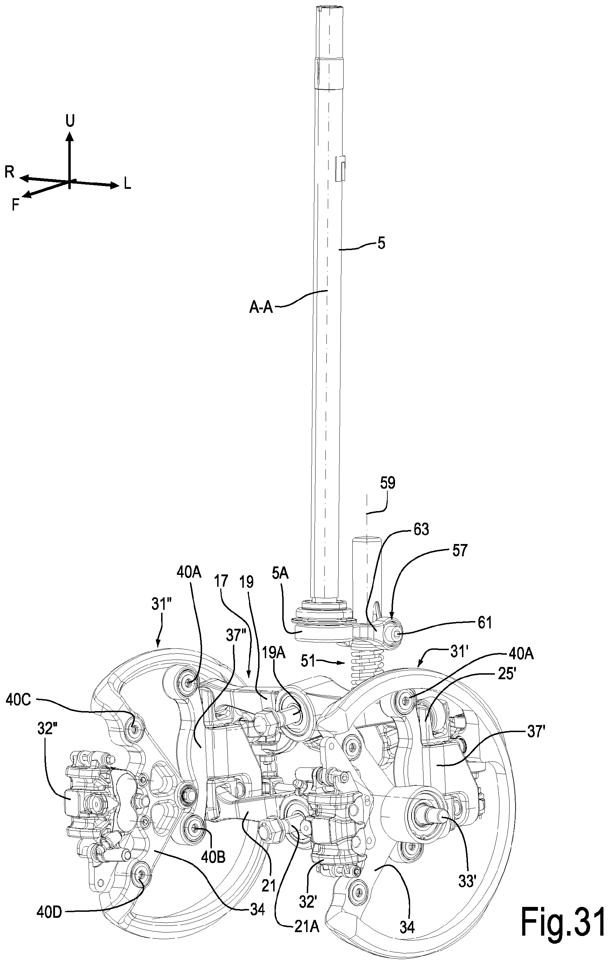

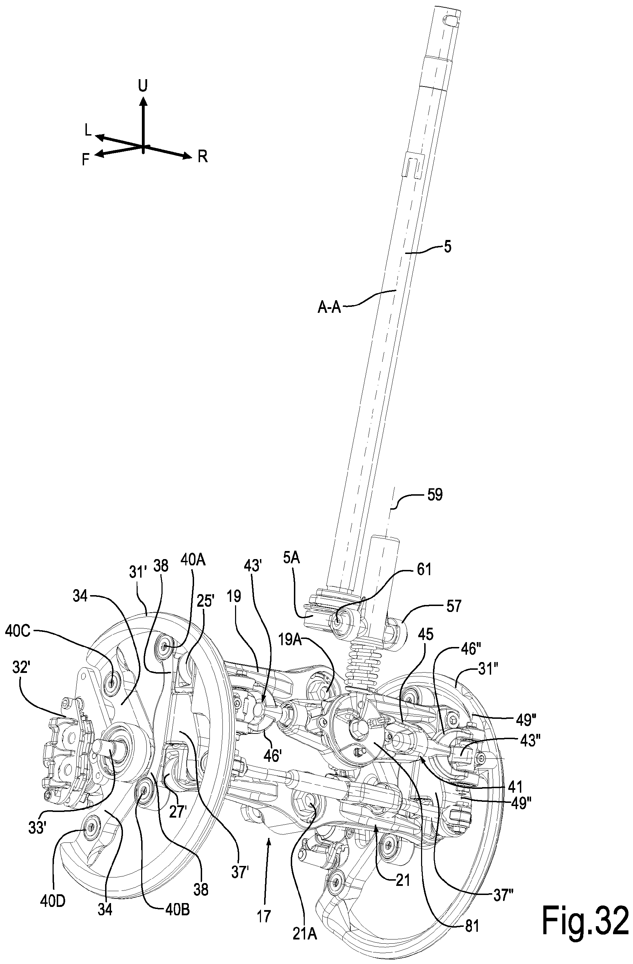

### Embodiment of Figs. 20 to 32

Figs. 20 to 32 show a practical embodiment of a three-wheeled motorcycle in the form of a scooter, which comprises a steering device according to the kinematic configuration illustrated in the diagram of Fig.5. The majority of the components of the embodiment of Figs. 20 to 32 correspond to those of the embodiment of Figs. 6 to 19 and will not be described again. These identical or equivalent components are marked with the same reference numbers used in Figs. 6 to 19 described above.

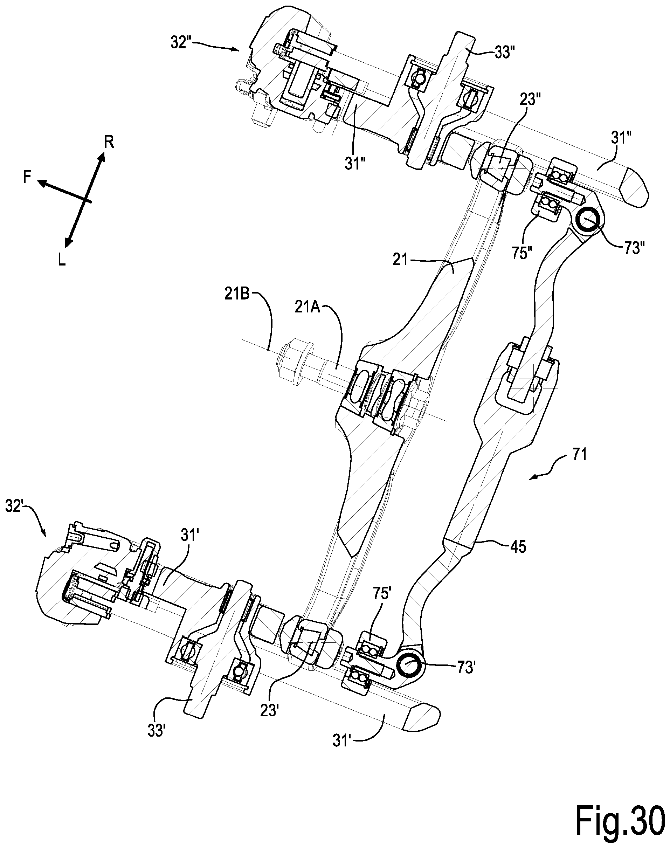

Similarly to what was illustrated with reference to the simplified diagram of Fig.5, the embodiment of Figs. 20 to 32 comprises a first connecting bar 41 of variable length, and a second connecting bar 71, which transmits the steering movement from one to the other of the two supporting members 31', 31" of the wheels 13', 13". In the embodiment illustrated in Figs. 20 to 32 (see in particular Fig.30), the second connecting bar 71 is made of two parts or portions, which can rotate with respect to one another around an axis parallel to the longitudinal direction of the connecting bar 71, but without variations in length being possible.

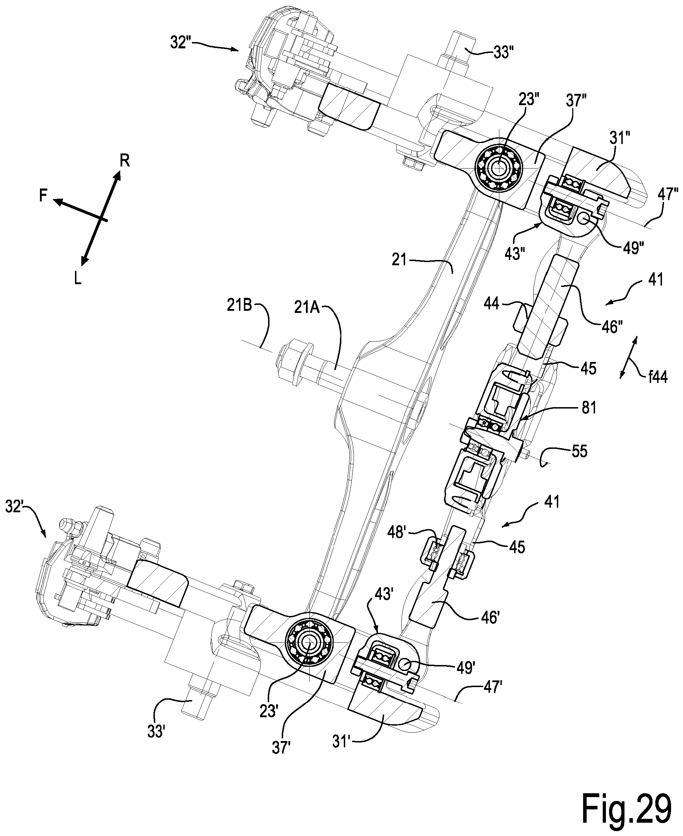

In the embodiment of Figs. 20 to 32, as can be seen in particular in the section of Fig.29, the first connecting bar 41 comprises three portions connected to one another. More precisely, the first connecting bar 41 comprises a central or intermediate part 45 and two end parts 46', 46". The end part 46' is connected to the central part 45 by means of a bearing 48', which allows mutual rotation between the intermediate or central part 45 and the end part 46', but does not allow mutual sliding. Vice versa, and contrary to the case of the embodiment of Figs. 6 to 19, the connection between the central or intermediate part 45 and the end part 46" is obtained through a joining element 44, which allows a variation of length according to the arrow f44 (Fig.29) of the first connecting bar 41. The function of this possible variation of the length of the first connecting bar 41 is as described above in relation to Figs. 2 and 3. In substance, due to this possible elongation and contraction, which can be limited to a few millimeters or centimeters, the kinematic mechanism obtained is no longer affected by the constraint of constancy of he distance between the connection points of the supporting members 31', 31" to the first connecting bar 41. In the case of different up-and-down movements for the two wheels 13', 13", as schematically illustrated in Fig. 2, the first connecting bar 41 can expand or contract according to the arrow f44 so that the roto-translation movement of a supporting member 31', 31" with respect to its sleeve 37 guaranteed by the rocker arms 52, does not transmit an unwanted steering movement to the wheel 13', 13" supported by the other of the two supporting members 31', 31".

However, as described with reference to Figs. 3 and 5, the degree of freedom introduced by the joining element 44 ensures that the steering movement controlled by the handlebar 7 cannot be transmitted by the first connecting bar 41 to both the wheels 13', 13". In the configuration of Figs. 20 to 32, in particular, the steering movement is transmitted by means of the central shock absorber assembly 51 and the part 46' of the first connecting bar 41 to the wheel 13', but cannot be transmitted to the wheel 13", due to the joining element 44 interposed between the central part 45 and the end part 46" of the first connecting bar 41.

Therefore, the forecarriage 1 of Figs. 20 to 32 comprises a second connecting bar 71 substantially parallel to the first connecting bar 41. In the described embodiment, the first and the second connecting bars 41, 71 are positioned on the same side with respect to the plane on which the four-bar linkage 17 lies, contrary to what is shown schematically in Figs. 3 and 5.

The second connecting bar 71 is joined, by means of hinges 73' and 73" and brackets 75' and 75", to the sleeves 37' and 37". It should be noted that the sleeves 37 are shown as provided with brackets 75 also in Figs. 6 to 19, although in that case they have no function.

The hinges 73' and 73" allow mutual rotations, around axes parallel to the steering axes 35', 35", between the second connecting bar 71 and the brackets 75', 75". The brackets 75' and 75" are rigidly connected to the sleeves 37', 37" and move integrally therewith.

With the arrangement illustrated in Figs. 20 to 32, as already described in relation to Figs. 3 and 5, the steering movement is transmitted from the handlebar 7 to the wheel 13' by means of the second steering bar 71 as follows. By rotating, the steering column 5 causes the shock absorber assembly 51 to move along an arc of circumference centered on the axis A-A of the steering column 5. This movement is transmitted by means of the shock absorber assembly 51 and the portion 46' of the first connecting bar 41 to the wheel 13' and to its supporting member 31". This causes rotation of the sleeve 37' around the steering axis 35'. Rotation of the supporting member 31' is transmitted, by means of the bracket 75', the second connecting bar 71 and the bracket 75", to the sleeve 37". Consequently, this latter rotates around its steering axis 35", causing rotation of the supporting member 31" and of the wheel 13" around the aforesaid steering axis 35".

While the invention has been described in terms of various specific embodiments, it will be apparent to those skilled in the art that various modifications, changes and omissions are possible without departing from the scope of the claims.

## Claims

1. A forecarriage (1) of a motor vehicle (100) comprising:
a forecarriage frame (111);
a tilting four-bar linkage (17) connected to the forecarriage frame (111) that supports, by means of a first supporting member (31') and a second supporting member (31"), a first front wheel (13') and a second front wheel (13") respectively;
a steering column tube (3), connected to the forecarriage frame (111);
a steering column (5) rotatingly housed in the steering column tube (3) and connected to a first connecting bar (41) which connects the first supporting member (31') and the second supporting member (31") to one another;
a shock absorber assembly (51) interconnected between the steering column (5) and the first connecting bar (41), said shock absorber assembly (51) being adapted to dampen up-and-down movements of the first front wheel (13') and of the second front wheel (13").

2. The forecarriage of claim 1, wherein the first supporting member (31') and the second supporting member (31") are rotatingly connected to the tilting four-bar linkage (17).

3. The forecarriage of claim 2, wherein the first supporting member (31') and the second supporting member (31") are hinged respectively to a first upright (23') and to a second upright (23") of the tilting four-bar linkage (17).

4. The forecarriage of claim 1 or 2 or 3, wherein the shock absorber assembly (51) interconnected between the steering column (5) and the first connecting bar (41) is the only shock absorber assembly for damping the up-and-down movements of the first front wheel (13') and of the second front wheel (13").

5. The forecarriage of any one of the previous claims, wherein the shock absorber assembly (51) is connected to the steering column (5) by means of a mechanism with two degrees of freedom (57), in particular around two axes of rotation (59,61), preferably orthogonal to one another.

6. The forecarriage of claim 5, wherein the shock absorber assembly (51) is connected to the steering column (5) so as to be rotatable around a first, substantially horizontal axis (61), while looking at the vehicle in an erect position from the front, and a second axis (59) substantially parallel to the steering column.

7. The forecarriage of one or more of the previous claims, wherein the shock absorber assembly (51) is connected to the first connecting bar (41) by means of a mechanism with two degrees of freedom (53), in particular around two axes of rotation, preferably orthogonal to one another.

8. The forecarriage of claim 7, wherein the first connecting bar (41) and the shock absorber assembly (51) are connected to one another so as to be rotatable with respect to one another around at least one of: an axis oriented according to a longitudinal direction of the first connecting bar (41), and an axis (55) orthogonal to the longitudinal direction of the first connecting bar (41) and to a longitudinal axis of the shock absorber assembly (51).

9. The forecarriage of one or more of the previous claims, wherein the first connecting bar (41) comprises at least two bar portions (41A, 41B; 46', 46", 45) connected to one another so as to be rotatable with respect to one another around a longitudinal axis of the first connecting bar (41).

10. The forecarriage of one or more of the previous claims, wherein the first connecting bar (41) comprises at least two connecting bar portions (41A, 41B; 46', 46", 45) connected to one another so as to allow a variation in the length of the first connecting bar (41) in the presence of an unequal up-and-down movement of the first front wheel (13') and of the second front wheel (13").

11. The forecarriage of one or more of the previous claims, wherein the first connecting bar (41) is connected, at opposing ends (42', 42"), to the first supporting member (31') and the second supporting member (31"), respectively, by means of a mechanism (43', 43") allowing two degrees of freedom around two axes of rotation (47', 49'; 47", 49"), preferably orthogonal to one another and preferably orthogonal to the longitudinal direction of the first connecting bar (41).

12. The forecarriage of one or more of the previous claims, wherein the tilting four-bar linkage (17) comprises: a pair of cross members (19, 21), each hinged to the forecarriage frame (111) by means of respective mid-position hinges, so as to be pivotable around parallel axes (19A, 21A), substantially lying on a center-line plane (M) of the forecarriage frame (111); and a pair of uprights (23', 23"), each hinged to a corresponding end of the two cross members (19, 21) by means of hinges (25', 25", 27', 27") defining axes of rotation parallel to the axes around which the cross members (19, 21) rotate with respect to the forecarriage frame (111).

13. The forecarriage of claim 12, wherein each of said first supporting member (31') and second supporting member (31") is connected to a respective upright (23', 23") of the tilting four-bar linkage (17), so as to be rotatable around a corresponding steering axis (35'. 35") by means of a rotation command imparted by the steering column (5).

14. The forecarriage of claim 13 wherein the steering axis (35', 35") of each supporting member (31', 31") is substantially coincident with a longitudinal axis of the respective upright (23', 23").

15. The forecarriage of claim 13 or 14, wherein each supporting member (31' 31") is connected to the respective upright (23', 23") by means of a sleeve (37', 37") supported on the upright (23', 23") in a rotating manner around the respective steering axis (35', 35").

16. The forecarriage of one or more of the claims from 12 to 15, wherein each supporting member (31', 31") is connected to the corresponding upright (37'. 37") so as to be rotatable or roto-translatable around at least one springing axis (39', 39"; 40A, 40B), substantially orthogonal to the corresponding steering axis (35', 35").

17. The forecarriage of one or more of the previous claims, comprising a device for blocking the tilting movement (81) of the tilting four-bar linkage (17).

18. The forecarriage of claim 17, wherein the device for blocking the tilting movement (81) comprises a member for blocking the first connecting bar (41) and the shock absorber assembly (51), which selectively prevents a relative rotation movement between the shock absorber assembly and the first connecting bar.

19. The forecarriage of one or more of the previous claims, comprising a second connecting bar (71), having a fixed length, said second connecting bar (71) being connected to the tilting four-bar linkage (17) at points which are neutral with respect to the up-and-down movements of the first front wheel and the second front wheel.

20. The forecarriage of claim 19, when dependent at least on claim 15, wherein the second connecting bar (71) is hinged at the ends thereof to the sleeves (37'. 37") connecting the supporting members (31', 31") to the uprights (23', 23") of the tilting four-bar linkage (17).

21. A motor vehicle (100) comprising a rear section (2) with at least one rear driving wheel (103) and a forecarriage (1) according to one or more of the previous claims.

## Patentansprüche

1. Vordergestell (1) eines Kraftfahrzeugs (100) mit:
einem Vordergestell-Rahmen (111),
einem kippbaren Vierstangenlenker (17), der mit dem Vordergestell-Rahmen (111) verbunden ist, der mittels eines ersten Trägerelements (31') und eines zweiten Trägerelements (31") ein erstes Vorderrad (13') bzw. ein zweites Vorderrad (13") trägt,
einem Steuersäulen-Rohr (3), das mit dem Vordergestell-Rahmen (111) verbunden ist,
einer Steuersäule (5), die drehbar in dem Steuersäulen-Rohr (3) aufgenommen ist und mit einem ersten Verbindungsstab (41) verbunden ist, der das erste Trägerelement (31') und das zweite Trägerelement (31") miteinander verbindet,
einer Stoßdämpfer-Anordnung (51), die zwischen der Steuersäule (5) und dem ersten Verbindungsstab (41) verbunden ist, wobei die Stoßdämpfer-Anordnung (51) ausgebildet ist, eine Auf- und Abbewegung des ersten Vorderrades (13') und des zweiten Vorderrades (13") zu dämpfen.

2. Vordergestell nach Anspruch 1, wobei das erste Trägerelement (31') und das zweite Trägerelement (31") drehbar mit dem Vierstangenlenker (17) verbunden sind.

3. Vordergestell nach Anspruch 2, wobei das erste Trägerelement (31') und das zweite Trägerelement (31") jeweils an einen ersten Ständer (23') und einen zweiten Ständer (23") des Vierstangenlenkers angelenkt sind.

4. Vordergestell nach Anspruch 1 oder 2 oder 3, wobei die Stoßdämpfer-Anordnung (51), die zwischen der Steuersäule (5) und dem ersten Verbindungsstab (41) verbunden ist, die einzige Stoßdämpfer-Anordnung zur Dämpfung der Auf- und Abbewegungen des ersten Vorderrades (13') und des zweiten Vorderrades (13") ist.

5. Vordergestell nach einem der vorstehenden Ansprüche, wobei die Stoßdämpfer-Anordnung (51) mit der Steuersäule (5) mittels eines Mechanismus mit zwei Freiheitsgraden (57), insbesondere um zwei Drehachsen (59, 61), die vorzugsweise orthogonal zueinander sind, verbunden ist.

6. Vordergestell nach Anspruch 5, wobei die Stoßdämpfer-Anordnung (51) mit der Steuersäule (5) so verbunden ist, dass sie um eine erste, im wesentlichen horizontale Achse (61) drehbar ist, wenn man das Fahrzeug in einer aufrechten Position von vorn sieht, und einer zweiten Achse (59), die im Wesentlichen parallel zu der Steuersäule ist.

7. Vordergestell nach einem oder mehreren der vorstehenden Ansprüche, wobei die Stoßdämpfer-Anordnung (51) mit dem ersten Verbindungsstab (41) mittels eines Mechanismus mit zwei Freiheitsgraden (53) verbunden ist, insbesondere um zwei Drehachsen, die vorzugsweise orthogonal zueinander sind.

8. Vordergestell nach Anspruch 7, wobei der erste Verbindungsstab (41) und die Stoßdämpfer-Anordnung (51) miteinander so verbunden sind, um drehbar mit Bezug aufeinander zu sein, und zwar um mindestens eine von: einer Achse, die entsprechend einer Längsrichtung des ersten Verbindungsstabs (41) orientiert ist, und einer Achse (55), die orthogonal zu der Längsrichtung des ersten Verbindungstabs (41) und zu einer Längsachse der Stoßdämpfer-Anordnung (51) ist.

9. Vordergestell nach einem oder mehreren der vorstehenden Ansprüche, wobei der erste Verbindungsstab (41) mindestens zwei Verbindungsstab-Teile (41A, 41B; 46', 46", 45) aufweist, die miteinander so verbunden sind, um mit Bezug aufeinander um eine Längsachse des ersten Verbindungsstabs (41) drehbar zu sein.

10. Vordergestell nach einem der vorstehenden Ansprüche, wobei der erste Verbindungsstab (41) mindestens zwei Verbindungstab-Teile (41A, 41B; 46', 46", 45) aufweist, die miteinander so verbunden sind, um eine Variation in der Länge des ersten Verbindungstabs (41) bei Vorhandensein einer ungleichmäßigen Auf- und Abbewegung des ersten Vorderrades (31') und des zweiten Vorderrades (13") zu ermöglichen.

11. Vordergestell nach einem oder mehreren der vorstehenden Ansprüche, wobei der erste Verbindungsstab (41) an gegenüberliegenden Enden (42', 42") mit dem ersten Trägerelement (31') bzw. dem zweiten Trägerelement (31") mittels eines Mechanismus (43', 43") verbunden ist der zwei Freiheitsgrade um zwei Drehachsen (47', 49', 47", 49") erlaubt, vorzugsweise orthogonal zueinander und vorzugsweise orthogonal zu der Längsrichtung des ersten Verbindungsstabs (41).

12. Vordergestell nach einem oder mehreren der vorstehenden Ansprüche, wobei der kippbare Vierstangenlenker (17) aufweist: ein Paar von Querelementen (19, 21), die jeweils an dem Vordergestell-Rahmen (111) mittels jeweiliger Mittelposition-Scharniere angelenkt sind,, um so um parallele Achsen (19 A, 21 A) schwenkbar zu sein, die im Wesentlichen auf einer Mittellinien-Ebene (M) des Vordergestell-Rahmens (111) liegen, und ein Paar von Ständern (23', 23"), die jeweils an einem entsprechenden Ende der beiden Querelemente (19, 21) mittels Scharnieren (25', 25", 27', 27") angelenkt sind, die Drehachsen definieren, die parallel zu den Achsen sind, um die die Querelemente (19, 21) mit Bezug auf den Vordergestell-Rahmen (111) drehen.

13. Vordergestell nach Anspruch 12, wobei sowohl das erste Trägerelement (31') als auch das zweite Trägerelement (31") mit einem jeweiligen Ständer (23', 23") des kippbaren Vierstangenlenkers (17) verbunden ist, um um eine entsprechende Steuerachse (35', 35") mittels eines Drehbefehls drehbar zu sein, der von der Steuersäule (5) ausgeübt wird.

14. Vordergestell nach Anspruch 13, wobei die Steuerachse (35', 35 ") jedes Trägerelements (31', 31") im Wesentlichen mit einer Längsachse des jeweiligen Ständers (23', 23") übereinstimmt

15. Vordergestell nach Anspruch 13 oder 14, wobei jedes Trägerelement (31', 31") mit dem jeweiligen Ständer (23', 23") mittels einer Hülse (37', 37") verbunden ist, die auf dem Ständer (23', 23") in einer drehbaren Weise um die jeweilige Steuerachse (35', 35") gelagert ist.

16. Vordergestell nach einem oder mehreren der Ansprüche 12 bis 15, wobei jedes Trägerelements (31', 31") mit dem jeweiligen Ständer (37', 37") so verbunden ist, um drehbar oder drehverschiebbar um mindestens eine Federungsachse (39', 39", 40A, 40B) zu sein, die im Wesentlichen orthogonal zu der jeweiligen Steuerachse (35', 35") ist.

17. Vordergestell nach einem oder mehreren der vorstehenden Ansprüche mit einer Vorrichtung zum Blockieren der Kippbewegung (81) des kippbaren Vierstangenlenkers (17).

18. Vordergestell nach Anspruch 17, wobei die Vorrichtung zum Blockieren der Kippbewegung (81) ein Element zum Blockieren des ersten Verbindungsstabs (41) und der Stoßdämpfer-Anordnung (41) aufweist, die selektiv eine relative Drehbewegung zwischen der Stoßdämpfer-Anordnung und dem ersten Verbindungsstab verhindert.

19. Vordergestell nach einem oder mehreren der vorstehenden Ansprüche mit einem zweiten Verbindungsstab (71) mit einer festen Länge, wobei der zweite Verbindungsstab (71) zwischen dem kippbaren Vierstangenlenker (17) an Punkten verbunden ist, die neutral mit Bezug auf die Auf- und Abbewegungen des ersten Vorderrades und des zweiten Vorderrades sind.

20. Vordergestell nach Anspruch 19 wenn von mindestens Anspruch 15 abhängig, wobei der zweite Verbindungsstab (71) an seinen Enden mit den Hülsen (37', 37") verbunden ist, die die Trägerelemente (31', 31") mit den Ständern (23', 23") des kippbaren Vierstangenlenker (17) verbinden.

21. Kraftfahrzeug (100) mit einem hinteren Abschnitt (2) mit mindestens einem hinteren Antriebsrad (103) und einem Vordergestell (1) nach einem oder mehreren der vorstehenden Ansprüche.

## Revendications

1. Un avant-train (1) de véhicule à moteur (100) comprenant :
un cadre d'avant-train (111) ;
une liaison basculante à quatre barres (17) connectée au cadre d'avant-train (111) et qui supporte, au moyen d'un premier organe de support (31') et d'un deuxième organe de support (31"), un première roue avant (13') et une deuxième roue avant (13"), respectivement ;
un tube de colonne de direction (3), connecté au cadre d'avant-train (111) ;
une colonne de direction (5) logée pivotante dans le tube de colonne de direction (3) et connectée à une première barre de connexion (41) qui connecte le premier organe de support (31') et le deuxième organe de support (31") l'un à l'autre ;
un assemblage d'absorption de chocs (51) interconnecté entre la colonne de direction (5) et la première barre de connexion (41), ledit assemblage d'absorption de chocs (51) étant adapté pour amortir les mouvements vers le haut et vers le bas de la première roue avant (13') et de la deuxième roue avant (13").

2. L'avant-train selon la revendication 1, dans lequel le premier organe de support (31') et le deuxième organe de support (31") sont connectés pivotants à la liaison basculante à quatre barres (17).

3. L'avant-train selon la revendication 2, dans lequel le premier organe de support (31') et le deuxième organe de support (31") sont articulés respectivement à un premier montant (23') et à un deuxième montant (23") de la liaison basculante à quatre barres (17).

4. L'avant-train selon la revendication 1 ou 2 ou 3, dans lequel l'assemblage d'absorption de chocs (51) interconnecté entre la colonne de direction (5) et la première barre de connexion (41) est le seul assemblage d'absorption de chocs pour amortir les mouvements vers le haut et vers le bas de la première roue avant (13') et de la deuxième roue avant (13").

5. L'avant-train selon l'une quelconque des revendications précédentes, dans lequel l'assemblage d'absorption de chocs (51) est connecté à la colonne de direction (5) au moyen d'un mécanisme à deux degrés de liberté (57), en particulier autour de deux axes de rotation (59,61), de préférence perpendiculaires l'un à l'autre.

6. L'avant-train selon la revendication 5, dans lequel l'assemblage d'absorption de chocs (51) est connecté à la colonne de direction (5) de façon à être rotatif autour d'un premier axe (61) sensiblement horizontal, si l'on regarde le véhicule en position érigée depuis l'avant, et d'un deuxième axe (59) sensiblement parallèle à la colonne de direction.

7. L'avant-train selon l'une ou plusieurs des revendications précédentes, dans lequel l'assemblage d'absorption de chocs (51) est connecté à la première barre de connexion (41) au moyen d'un mécanisme à deux degrés de liberté (53), en particulier autour de deux axes de rotation, de préférence perpendiculaires l'un à l'autre.

8. L'avant-train selon la revendication 7, dans lequel la première barre de connexion (41) et l'assemblage d'absorption de chocs (51) sont connectés l'un à l'autre de manière à être rotatifs l'une par rapport à l'autre autour d'au moins un axe choisi parmi : un axe orienté suivant une direction longitudinale de la première barre de connexion (41) et un axe (55) perpendiculaire à la direction longitudinale de la première barre de connexion (41) et un axe longitudinal de l'assemblage d'absorption de chocs (51).

9. L'avant-train selon l'une ou plusieurs des revendications précédentes, dans lequel la première barre de connexion (41) comprend au moins deux parties de barre (41A, 41B ; 46', 46", 45) connectées l'une à l'autre de manière à être rotatives l'une par rapport à l'autre autour d'un axe longitudinal de la première barre de connexion (41).

10. L'avant-train selon l'une ou plusieurs des revendications précédentes, dans lequel la première barre de connexion (41) comprend au moins deux parties de barre de connexion (41A, 41B ; 46', 46", 45) connectées l'une à l'autre de façon à permettre une variation de la longueur de la première barre de connexion (41) en présence d'un mouvement inégal vers le haut et vers le bas de la première roue avant (13') et de la deuxième roue avant (13").

11. L'avant-train selon l'une ou plusieurs des revendication précédentes, dans lequel la première barre de connexion (41) est connectée, à des extrémités opposées (42', 42"), au premier organe de support (31') et au deuxième organe de support (31"), respectivement, au moyen d'un mécanisme (43', 43") permettant deux degrés de liberté autour de deux axes de rotation (47', 49' ; 47", 49"), de préférence perpendiculaires l'un à l'autre et de préférence perpendiculaires à la direction longitudinale de la première barre de connexion (41).

12. L'avant-train selon l'une ou plusieurs des revendications précédentes, dans lequel la liaison basculante à quatre barres (17) comprend : une paire d'organes transversaux (19, 21), chacun étant articulé au cadre d'avant-train (111) au moyen d'articulations respectives de demi-position, de façon à être pivotables autour d'axes parallèles (19A, 21A) se situant sensiblement sur un plan de ligne centrale (M) du cadre d'avant-train (111) ; et une paire de montants (23', 23"), chacun étant articulé à une extrémité correspondante des deux organes transversaux (19,21) au moyen d'articulations (25', 25", 27', 27") définissant des axes de rotation parallèles aux axes autour desquels les organes transversaux (19, 21) tournent par rapport au cadre d'avant-train (111).

13. L'avant-train selon la revendication 12, dans lequel chacun desdits premier organe de support (31') et deuxième organe de support (31") est connecté à un montant respectif (23', 23") de la liaison basculante à quatre barres (17), de façon être rotatif autour d'un axe de direction (35', 35") correspondant au moyen d'une commande de rotation provenant de la colonne de direction (5).

14. L'avant-train selon la revendication 13, dans lequel l'axe de direction (35', 35") de chaque organe de support (31', 31") coïncide sensiblement avec un axe longitudinal du montant respectif (23', 23").

15. L'avant-train selon la revendication 13 ou 14, dans lequel chaque organe de support (31', 31") est connecté au montant respectif (23', 23") au moyen d'un manchon (37', 37") supporté sur le montant (23', 23") d'une manière rotative autour de l'axe de direction respectif (35', 35").

16. L'avant-train selon l'une ou plusieurs des revendications 12 à 15, dans lequel chaque organe de support (31', 31") est connecté au montant correspondant (37', 37") de façon à être rotatif ou roto-translatable autour d'au moins un axe à ressort (39', 39" ; 40A, 40B), sensiblement perpendiculaire à l'axe de direction correspondant (35', 35").

17. L'avant-train selon l'une ou plusieurs des revendications précédentes, comprenant un dispositif de blocage du mouvement basculant (81) de la liaison basculante à quatre barres (17).

18. L'avant-train selon la revendication 17, dans lequel le dispositif de blocage du mouvement basculant (81) comprend un organe pour bloquer la première barre de connexion (41) et l'assemblage d'absorption de chocs (51), qui empêche sélectivement un mouvement de rotation relatif entre l'assemblage d'absorption de chocs et la première barre de connexion.

19. L'avant-train selon l'une ou plusieurs des revendications précédentes, comprenant une deuxième barre de connexion (71), ayant une longueur fixe, ladite deuxième barre de connexion (71) étant connectée à la liaison basculante à quatre barres (17) à des endroits qui sont neutres par rapport aux mouvements vers le haut et vers le bas de la première roue avant et de la deuxième roue avant.

20. L'avant-train selon la revendication 19, lorsqu'elle est dépendante de la revendication 15, dans lequel la deuxième barre de connexion (71) est articulée par ses extrémités aux manchons (37', 37") connectant les organes de support (31', 31") aux montants (23', 23") de la liaison basculante à quatre barres (17).

21. Un véhicule à moteur (100) comprenant une section arrière (2) avec au moins une roue motrice arrière (103) et un avant-train (1) selon l'une ou plusieurs des revendications précédentes.
